# EUROPEAN PATENT APPLICATION

(11) **EP 4 717 606 A1**
(43) Date of publication of application: **01.04.2026**
(21) Application number: 24300005.6
(22) Date of filing: 30.09.2024
(51) Int. Cl.: B64D 37/30, B64D 41/00, F16L 9/18, F16L 59/14, F17C 3/08, F17C 3/10, G01M 3/24, F25B 49/00, G01M 3/22

(54) **COMPUTER-IMPLEMENTED METHOD AND CRYOGENIC FLUID SYSTEM**

(71) Applicant: Airbus Operations Limited, Bristol BS34 7PA (GB)
(72) Inventor: Papadopoulos, Christopher, Bristol, BS34 7PA (GB)
(74) Representative: EIP

(57) **Abstract**

Disclosed is a computer-implemented method. The computer-implemented method comprises receiving data from an acoustic sensor, the data indicative of a leak in a vacuum-insulated assembly of a cryogenic fluid system. The computer-implemented method also comprises causing an action to be performed based on the data.

## Description

### TECHNICAL FIELD

The present invention relates to computer-implemented methods, cryogenic fluid systems, particularly hydrogen fuel systems, and aircraft comprising cryogenic fluid systems.

### BACKGROUND

Hydrogen fuel systems for aircraft may comprise vacuum-insulated pipes for transporting cryogenic hydrogen fuel between components of the hydrogen fuel system. Vacuum-insulated pipes employ a vacuum in a space between inner and outer pipes to thermally insulate the cryogenic hydrogen fuel flowing through the inner pipe.

### SUMMARY

A first aspect of the present invention provides a computer-implemented method comprising: receiving data from an acoustic sensor, the data indicative of a leak in a vacuum-insulated assembly of a cryogenic fluid system; and causing an action to be performed based on the data.

Acoustic signals generated in the vacuum insulated assembly and sensed by the acoustic sensor may be affected by the leak. Such acoustic signals may be generated by the leak itself. For instance, pressure waves may result from an initial formation of a crack in the vacuum insulated assembly. Moreover, fluid flowing through or across such a crack may emit an acoustic signal, particularly if the fluid is gaseous. Acoustic signals may be generated by some other source, such as cryogenic fluid flowing in the vacuum-insulated assembly, and/or by operation of pumps, valves or other components of a system comprising the vacuum-insulated assembly. Such acoustic signals may change when the leak is formed. For instance, signals generated externally to the vacuum-insulated assembly may initially not pass through a vacuum interspace in the vacuum-insulated assembly, and so may have a low-amplitude if they are received by the sensor. In the event of a leak that relieves a vacuum in the vacuum interspace, an amplitude of such externally-generated signals may increase, and so may be more readily detectable. Moreover, fluid present in such a vacuum-interspace may attenuate vibrations in pipework of the vacuum-insulated assembly, such as vibrations caused by fluid flowing through the vacuum-insulated assembly.

In any event, acoustic signals are able to travel through fluids and physical structures, so the acoustic sensor may be able to sense acoustic signals associated with the leak even when the acoustic sensor is located away from the leak, such as in a different part of the vacuum-insulated assembly to the leak.

By receiving the data from the acoustic sensor, the action may be caused to be performed based on data indicative of a leak in a greater number of locations in the vacuum-insulated assembly than when data is received from a single other type of sensor. For instance, to detect a leak of cryogenic fluid into a vacuum interspace of the vacuum-insulated assembly using a pressure sensor, or a composition sensor detector, such a sensor may need to be located within the vacuum interspace. Where the vacuum-insulated assembly comprises separate sections of vacuum interspace, such sensors would also need to be provided within each section. In contrast, because acoustic signals associated with a leak into a vacuum interspace may travel to other parts of the vacuum insulated assembly, the acoustic sensor may be able to provide data indicative of a leak into more than one vacuum interspace.

Optionally, the computer-implemented method comprises determining the leak in the vacuum-insulated assembly based on the data indicative of the leak. Optionally, the computer-implemented method comprises causing the action to be performed based on the determination of the leak in the vacuum-insulated assembly.

Optionally, the computer-implemented method is performed by a processor of a controller of the cryogenic fluid system. For example, the computer-implemented method may comprise receiving, at the processor, the data from the acoustic sensor. Optionally, the computer-implemented method comprises the processor causing the action to be performed based on the data. Optionally, the causing the action to be performed comprises the processor issuing instructions that cause the action to be performed by another component of the cryogenic fluid system. In such cases, issuance of instructions by the processor can be considered an action.

Optionally, the vacuum-insulated assembly comprises a vacuum-insulated pipe of the cryogenic fluid system, or a vacuum-insulated tank of the cryogenic fluid system. Optionally, the cryogenic fluid system is configured to handle cryogenic hydrogen. For instance, the cryogenic fluid system may be a hydrogen fuel system, such as an aircraft hydrogen fuel system.

Optionally, the data is indicative of a parameter of an acoustic signal sensed by the acoustic sensor. Optionally, the data comprises the parameter. Optionally, the computer-implemented method comprises using a detection loop to detect the data, such as to detect the parameter, using the acoustic sensor. Optionally, the data comprises, or is indicative of, a change in the parameter sensed by the acoustic sensor. Optionally, the parameter comprises any one or more of: a frequency, a frequency spectrum, a peak amplitude, or an average amplitude, such as an RMS amplitude, of the acoustic signal sensed by the acoustic sensor. Optionally, the computer-implemented method comprises comparing the parameter, or the change in the parameter, to one or more predetermined parameters, or predetermined changes in a parameter. Optionally, the, or each, predetermined parameter, or predetermine change in the parameter, is associated with a particular type or location of a leak in the vacuum-insulated assembly. Optionally, the computer-implemented method comprises causing performance of the action on the basis of the comparison of the parameter, or the change in the parameter, to the one or more predetermined parameters, or the one or more predetermined changes in the parameter.

Optionally, the method comprises receiving the data from the acoustic sensor in real-time. Optionally, the processor is configured to receive the data from the acoustic sensor in real-time. Alternatively, the data from the acoustic sensor is stored in a memory, and the receiving the data comprises retrieving the data from the memory.

Optionally, the action comprises any one or more of the following: issuance of an alert based on the data indicative of the leak; recording of the data indicative of the leak to memory; scheduling maintenance of the cryogenic fluid system; and control of a component of the cryogenic fluid system.

Causing issuance of an alert may alert personnel to the presence and/or location of the leak, allowing appropriate remedial action to be taken. The alert may comprise at least one of an audible alert, a visual alert, and a digital alert stored in a log. The audible alert and/or the visual alert may be provided by a component remote from the cryogenic fluid system, such as an alert component in a flight deck of an aircraft comprising the cryogenic fluid system, or by an alert component of a ground station remote from the aircraft. The alert component may comprise at least one of a transducer to provide an audible alert, and a display device to display a visual signal. Such a display device may comprise, for example, an LED light or a screen, such as an LED light or screen in a flight deck of an aircraft or at a ground station. Causing the alert to be issued may comprise transmitting, such as by the processor of the controller of the cryogenic fluid system, an alert signal to the or each alert component, or to a controller configured to control the or each alert component.

Recording the data indicative of the leak to memory may allow the source, cause and/or location of the leak to be analysed at a later date, providing improved diagnostic capability compared to a case where such data from an acoustic sensor is not recorded. The data may be recorded to memory by the processor of the controller of the cryogenic fluid system.

Scheduling maintenance of the cryogenic fluid system may comprise scheduling a time for maintenance personnel, such as ground crew in the case of an aircraft cryogenic fluid system, to perform maintenance operations on the cryogenic fluid system. When the cryogenic fluid system is an aircraft cryogenic fluid system, scheduling maintenance of the cryogenic fluid system may comprise scheduling a maintenance operation at a time before a next flight of the aircraft. This may allow the leak in the cryogenic fluid system to be rectified at the next available opportunity, and before the cryogenic system needs to be used during the next flight, which may ensure a safety of the cryogenic fluid system.

Causing control of a component of the cryogenic fluid system may allow adverse effects of the leak to be mitigated, improving a safety and/or a reliability of the cryogenic fluid system compared to a system where such action is not taken. Optionally, the causing control of a component of the cryogenic fluid system comprises causing operation of a flow valve that is configured to control a flow of fluid in the vacuum-insulated assembly.

Optionally, when the computer-implemented method comprises using a detection loop to detect the data using the acoustic sensor, the action comprises adjusting a parameter of the detection loop to adjust a sensitivity of the detection of the data. The action may comprise increasing the sensitivity of the detection of data. For instance, the action may comprise increasing a sampling rate of the data, or, when the data comprises frequency data, adjusting a parameter of a frequency filter of the detection loop to increase a sensitivity of the detection loop to harmonics of a particular frequency. Adjusting the sensitivity of the detection of data using the acoustic sensor may increase the probability of correct detection of the leak, and may also provide more accurate data that can be used to improve the computer-implemented method.

Optionally, the data received from the acoustic sensor is indicative of a magnitude of the leak. Optionally, the computer-implemented method comprises determining the magnitude of the leak. Optionally, the magnitude is a flow rate of fluid through a source of the leak, and the magnitude threshold is a threshold flow rate. Optionally, the magnitude is a pressure, or rate of change of pressure, in a portion of the vacuum-insulated assembly, and the magnitude threshold is a threshold pressure or threshold rate of change of pressure.

Optionally, an amplitude of the data, such as an amplitude of a frequency of the data when the data comprises frequency data, is indicative of the magnitude of the leak. Optionally, the computer-implemented method comprises performing the action and/or determining the magnitude of the leak based on the amplitude.

Optionally, a rate of change of amplitude of the data is indicative of a magnitude of the leak. Optionally, when the data comprises frequency data, a rate of change in amplitude of a frequency, or frequency spectrum, of the data is indicative of the magnitude of the leak. Optionally, the computer-implemented method comprises performing the action and/or determining the magnitude of the leak based on the rate of increase in amplitude of the data. Optionally, a rate of increase in amplitude of the data is indicative of the magnitude of the leak. For instance, as noted above, when a vacuum is present in a vacuum interspace of the vacuum-insulated assembly, signals generated externally to the vacuum insulated assembly and passing through the vacuum-insulated assembly may not pass through the vacuum. Such signals as detected by the acoustic sensor may therefore be low-amplitude and difficult to detect amongst other signals. As fluid leaks into the vacuum interspace, such externally-generated signals may pass through the vacuum and increase in amplitude as pressure increases in the vacuum interspace, and so may become clearer and easier to detect. As such, a rate of increase in amplitude of a frequency or frequency spectrum of such signals may be indicative of the magnitude of the leak. Optionally, the computer-implemented method comprises performing the action and/or determining the magnitude of the leak based on the rate of increase in amplitude of the data. As fluid leaks into the vacuum interspace, the fluid in the vacuum interspace may increasingly attenuate, or dampen, vibrations that are experienced by the vacuum-insulated assembly, such as vibrations generated by fluid flowing through the vacuum-insulated assembly. A rate of change of in amplitude of such signals, such as a rate of change in a frequency or frequency spectrum of such signals, may be representative of a rate of increase in the damping effect provided by the fluid in the space. Optionally, the computer-implemented method comprises performing the action and/or determining the magnitude of the leak based on a rate of reduction in amplitude of the data, such as a rate of reduction in amplitude of a frequency or frequency spectrum of the data.

Optionally, the computer-implemented method comprises causing performance of a high-priority action if the data is indicative of a magnitude of the leak above a magnitude threshold and a low-magnitude action if the data is indicative of a magnitude equal to or less than the magnitude threshold. Optionally, the high-magnitude action alert is a higher-priority action than the low-magnitude action. For instance, the high-magnitude action may comprise causing issuance of a high-magnitude alert and the low-magnitude action may comprise causing issuance of a low-magnitude alert. The issuance of the low-magnitude alert may flag the leak and indicate that immediate remedial action is not required, whilst the high-magnitude alert may indicate that remedial action may be required sooner than when the lower-priority alert is issued. Optionally, the high-magnitude action comprises causing immediate remedial action to be performed, such as immediate ventilation of a part of the vacuum-insulated assembly. Optionally, the low-magnitude action comprises causing issuance of the alert without causing immediate ventilation of the part of the vacuum-insulated assembly. For instance, if the leak is of low enough magnitude, continued normal operation of the cryogenic fluid system may be possible whilst still providing cryogenic fluid to a fluid consumer in a state to permit continued operation of the fluid consumer at a desired level, such as providing hydrogen to a hydrogen fuel cell of an aircraft at a sufficient flow rate to permit a desired level of thrust to be provided. Performing the low-magnitude action in the event of a low-magnitude leak may thereby provide a cryogenic fluid system with improved uptime and/or a cryogenic fluid system that can support a sufficiently high mass flow rate of the cryogenic fluid to a fluid consumer.

Optionally, the data received from the acoustic sensor is indicative of a location of the leak in the vacuum-insulated assembly, and the computer-implemented method comprises causing the action to be performed based on the data.

By causing the action to be performed based on data indicative of the location of the leak, the computer-implemented method may be more versatile than a method in which an action is caused to be performed without considering the location of the leak. For instance, the action caused to be performed may change depending on the location of the leak that is indicated by the data received from the acoustic sensor. This may allow, for example, a different alert to be issued depending on the location of the leak that is indicated by the data, and/or may allow different remedial action to be taken, such as choosing whether or how to divert cryogenic fluid away from the location of the leak.

Optionally, the computer-implemented method comprises determining the location of the leak in the vacuum-insulated assembly based on the data indicative of the location of the leak.

Determining the location of the leak may provide improved diagnosis of the leak and/or provide improved versatility in the action that is subsequently caused to be performed compared to a method where the location of the leak is not determined.

Optionally, the computer-implemented method comprises causing the action to be performed based on the location of the leak determined. For example, if the leak is close to a fluid tank of the cryogenic system, upstream of pipework branching out to various fluid consumers, such as propulsion units of an aircraft, then the action may comprise operating components of the cryogenic fluid system to permit continued normal operation of the cryogenic fluid system. Otherwise, the fuel supply to all propulsion units may be interrupted. If the leak is downstream of such branching pipework, then the action may comprise operating one or more components of the cryogenic fluid system to isolate a line comprising the leak, which would only interrupt a fluid supply to one fluid consumer, such as to one propulsion unit of the aircraft. In this way, a sufficient number of propulsion units may remain operational to allow the aircraft to safely reach a destination, whether that is a departure airport, an intermediate diversionary airport or a destination airport. Optionally, location of the leak is determined by the processor of the controller of the cryogenic fluid system, where provided, based on the data.

Optionally, the data is indicative of cavitation or boiling of cryogenic fluid in the vacuum-insulated assembly. Optionally, the computer-implemented method comprises determining the location based on the data indicative of cavitation or boiling of cryogenic fluid in the vacuum-insulated assembly. If the leak is at a location further from a fluid tank, cryogenic fluid at the location of the leak may be warmer than at a location closer to the fluid tank, and so may be more susceptible to cavitation or boiling. Thus, determining the location based on data indicative of cavitation or boiling of cryogenic fluid in the vacuum-insulated assembly may allow the location of the leak to relative to such a fluid tank to be determined.

Optionally, the data is indicative of a duration of cavitated flow in the vacuum-insulated assembly. Optionally, the computer-implemented method comprises determining the location of the leak based on the duration of cavitated flow. A duration for which a cavitated flow exists may be shorter if the leak is in a location just upstream of a flow control device that restricts a flow of the cryogenic fluid through the vacuum-insulated assembly, such as a venturi section or valve, and may last longer if the leak is in a location downstream of such a flow control device. Optionally, the computer-implemented method comprises determining that the leak is at a location upstream of a flow control device if the duration of cavitated flow is below a lower duration threshold. Optionally, the computer-implemented method comprises determining that the leak is at a location downstream of the flow control device if the duration of cavitated flow is equal to or greater than an upper duration threshold. The upper duration threshold may be the same as the lower duration threshold. If the leak is located just downstream of the flow control device, then a pressure at the location of the leak may be less than a pressure immediately upstream of the flow control device, and so a pressure peak reached in the space due to the leak may be less than if the leak is located upstream of the flow control device. Optionally, the computer-implemented method comprises performing a different action when the leak is upstream of the flow control device to when the leak is downstream of the flow control device.

Optionally, the vacuum-insulated assembly comprises an outer wall, an inner wall within the outer wall, and a space between the inner wall and the outer wall, wherein the inner wall is configured to carry cryogenic fluid, and the space is evacuated to provide a vacuum. Optionally, the determining the location of the leak comprises at least one of the following: determining that the leak is a leak in the inner wall; determining that the leak is a leak in the outer wall; determining a location of the leak in the inner wall; and determining a location of the leak in the outer wall.

By determining whether the leak is in the inner wall or the outer wall, or determining the location of the leak in the inner wall or the outer wall, the method may provide improved diagnosis of the leak and/or provide more versatility in the action that is subsequently caused to be performed compared to a method where the location of the leak is not determined at all.

Determining that the leak is a leak in the inner wall may indicate that there is cryogenic fluid in the space. Determining that the leak is through the outer wall may indicate that an external atmosphere external to the outer wall is present in the space. This may, in turn, indicate the presence of liquified oxygen (02) in the space, particularly if the external atmosphere is ambient air containing 02. Liquefaction of 02 may occur during a rapid cooling of the external atmosphere as it contacts the inner wall carrying cryogenic fluid. Moreover, a concentration of liquid 02 may increase during a warm-up event as other components with a lower melting temperature, such as Nitrogen (N2) evaporate. The action that is caused to be performed may depend on the location of the leak determined, such as whether the external atmosphere (e.g., liquid 02) or the cryogenic fluid is present in the space.

Optionally the data is indicative of a resonant frequency of the fluid in the space. Optionally, the computer-implemented method comprises, based on the resonant frequency, and optionally also based on a known size of the vacuum interspace: determining a pressure and/or density of the fluid in the space; determining a magnitude of the leak into the space; and/or determining a location of the source of the leak into the space.

Optionally, when the action comprises control of a component of the cryogenic fluid system, the causing the action to be performed comprises causing control of one or more of: a flow valve that is configured to control a flow of cryogenic fluid into and/or out of a fluid-carrying region, such as a conduit or storage space, defined by the inner wall; a vent valve that is configured to fluidically connect the space to a vent line; and a relief valve that is configured to fluidically connect the space to the fluid-carrying region defined by the inner wall.

Causing control of the flow valve may cause a reduction in an amount of cryogenic fluid flowing into, or an increase in an amount of cryogenic fluid flowing out of, the fluid carrying region defined by the inner wall, which may in turn reduce an amount of cryogenic fluid that is caused to leak into the space. This may reduce a pressure increase in the space due to evaporation of cryogenic fluid in the space, which may in turn reduce a stress on the inner and/or the outer wall, thereby improving a likelihood that an integrity of the inner and/or outer wall is maintained. Causing control of the flow valve may also, or alternatively, cause dynamic pressure changes in the vacuum-insulated assembly to be dampened. For instance, as the cryogenic fluid system operates, dynamic pressure changes may be observed in the cryogenic fluid flowing through the vacuum-insulated assembly. This may result in an oscillating flow of liquid cryogenic fluid into the space and back out of it. Causing operation of the flow valve may ensure that such cyclic behaviour does not become unstable by providing the damping effect.

Causing control of the flow valve may cause cryogenic fluid to be passed or diverted away from the location of the leak. This may reduce a pressure of cryogenic fluid in proximity of the leak which may, in turn, reduce an amount of cryogenic fluid that is caused to leak into the space. Causing cryogenic fluid to be passed or diverted away from the location of the leak may be particularly advantageous in the event of a deformation of the inner wall due to the leak, such as in the event of a deformation of an inner pipe defined by the inner wall that restricts a flow of cryogenic fluid through the inner pipe. In such a case, cryogenic fluid carried by the inner wall, or flowing towards the inner wall, can be passed or diverted away from the deformed part of the inner wall, thereby reducing a build-up of pressure in the inner pipe. Optionally, the data is indicative of a deformation of the inner wall. For instance, cryogenic fluid passing through the deformed inner pipe may be throttled, and so may emit acoustic signals having a distinct fingerprint. Optionally, the method comprises causing operation of the flow control device when the data is indicative of the deformation of the inner wall, such as to allow cryogenic fluid to flow away from the location of the deformation. Optionally, the flow control valve is caused to be operated so as not to trap cryogenic fluid between the flow control valve and the deformation.

Causing control of the vent valve may allow cryogenic fluid to pass through the vent line from the space, such as to a region external to the cryogenic fluid system. This may reduce a build-up of pressure in the space due to evaporation of the cryogenic fluid in the space, which may in turn reduce stresses on the inner and/or outer wall. Reducing stress on the inner and/or outer wall may improve a likelihood that an integrity of the inner and/or outer wall is maintained.

Causing control of the relief valve may allow cryogenic fluid in the space to more readily pass back into the main flow as pressure in the space increases. This may reduce a rate of increase in pressure in the space, and/or permit more rapid equalisation of pressure between the space and the fluid-carrying region. This, in turn, may reduce stresses on the inner and/or outer wall.

The method may comprise issuing an instruction to the component to cause control of the component. The processor may issue an instruction to the component to cause control of the component, or may issue an instruction to a processor of another controller to cause the other controller to control the component.

Optionally, the space is a first space and the vacuum-insulated assembly comprises a second space that is fluidically isolated from the second space. Optionally, the second space is defined between the inner and outer walls. Optionally, the determining the location of the leak comprises determining that the leak is into one or both of the first and second spaces. If the leak is into only one of the spaces, it may be possible to pass cryogenic fluid through the vacuum-insulated assembly to a fluid consumer, such as a propulsion unit of an aircraft, in a state sufficient to permit continued operation of the fluid consumer at a desired level, such as to provide a desired thrust. Thus, optionally, when the data indicates that the leak is only into the first space, the action is performed to permit continued flow of cryogenic fluid through the vacuum-insulated assembly, such as to cause operation of the vent valve and/or relief valve, without also causing operation of the flow valve to divert fluid away from the location of the leak. If the leak is into both the first and second spaces, it may be less likely to be possible to provide fluid to the fluid consumer, such as a propulsion unit of an aircraft, via the vacuum-insulated assembly in a state sufficient to permit continued operation of the fluid consumer at a desired level. In such a case, it may be necessary to divert fluid away from the fluid consumer. Optionally, when the data indicates that the cryogenic fluid is leaking into each of the first and second spaces, the action comprises causing operation of the flow valve, such as to cause cryogenic fluid to be passed or diverted away from the location of the leak.

Optionally, the computer-implemented method comprises causing a first action to be performed based on a determination that the leak is in a first location, and causing a second action to be performed based on a determination that the leak is in a second location, the second action different to the first action, and the second location different to the first location.

Performing different actions depending on where the leak is may provide a versatile method, and/or may aid diagnosis and repair of the leak.

Optionally, the method comprises causing the first action to be performed in response to a determination that leak is a leak in the inner wall. Optionally, the method comprises causing the second action to be performed, in response to a determination that the leak is a leak in the outer wall.

The first and second actions may comprise any of the actions described above. Optionally, the first action comprises issuing a first alert, and the second action comprising issuing a second alert, different to the first alert. Optionally, the first action comprises causing operation of the cryogenic fluid system in a first mode of operation, and the second action comprises causing operation of the cryogenic fluid system in a second mode of operation, different to the first mode of operation.

Optionally, the data is indicative of a sequence of events associated with the leak, and the computer-implemented method comprises causing the action to be performed based on the sequence of events indicated by the data.

By performing the action based on the sequence of events, an informed decision to may be taken as to the specific action that is caused to be performed which is tailored to the sequence of events, such as whether and/or how to issue an alert, or whether and/or how to operate components of the cryogenic fluid system.

Optionally, the method comprises determining the location of the leak in the vacuum-insulated assembly based on the sequence of events indicated by the data. The location of the leak may be more accurately determined, or inferred, based on the sequence of events indicated by the data than when the location is determined based on data that does not indicate a particular sequence of events. This is because a leak in a particular location in the vacuum-insulated assembly may lead to the occurrence of a particular sequence of events, the sequence of events being identifiable by a distinct and identifiable time-varying pattern in the acoustic signal sensed by the acoustic sensor.

Where the data comprises a parameter of the acoustic signal sensed by the acoustic sensor, the sequence of events may be indicated by a variation in the parameter over time, such as a variation in the frequency or frequency spectrum of the acoustic signal over time.

Optionally, the data is indicative of a submerged-crack sequence of events, and the computer-implemented method comprises causing the action to be performed based on the submerged-crack sequence of events. Optionally, the submerged-crack sequence of events comprises, in order: a leak event, in which cryogenic fluid flows through the inner wall into the space; a pressure increase event, in which liquid cryogenic fluid heats up, evaporates, and increases a pressure in the space; and a liquid backflow event, in which liquid cryogenic fluid flows through the inner wall from the space.

By performing the action based on the submerged-crack sequence of events, an informed decision may be taken as to the specific action that is caused to be performed which is tailored to the lower -leak sequence of events, such as whether and/or how to issue an alert, or whether and/or how to operate components of the cryogenic fluid system.

Optionally, the computer-implemented method comprises, based on the submerged-crack sequence of events, determining that the leak is at a lower-wall location in the inner wall, wherein the lower-wall location comprises a location in the inner wall below an upper level of cryogenic fluid in the space during the sequence of events. Determining that the leak is below a liquid level of cryogenic fluid in the space during the sequence of events may permit an informed decision to be taken as to the specific action that is caused to be performed, which is tailored to a leak at the lower-wall location.

During the liquid leak event, a liquid level of cryogenic fluid may increase in the space. During the pressure increase event, the pressure in the space may increase to a level above a pressure of cryogenic fluid carried by the inner wall, and so may push cryogenic fluid back through the inner wall from the space. The liquid backflow event occurs because the leak is below the liquid level in the space, and so liquid cryogenic fluid is (at least initially) pushed back through the inner wall from the space. If the leak were to be above the liquid level in the space, then gaseous cryogenic fluid would be pushed through the inner wall from the space. A flow rate of liquid cryogenic fluid through a source of the leak, such as a crack, in the inner wall, may be lower than a flow rate of gaseous cryogenic fluid through the source of the leak. Thus, a rate of increase in pressure in the space due to continued evaporation of liquid cryogenic fluid may be greater during the liquid backflow event than if gaseous cryogenic fluid were to be pushed through the inner wall from the space instead.

Thus, by causing performance of the action based on the submerged-crack sequence of events and/or determining that the leak is below a liquid level of cryogenic fluid in the space during the sequence of events, an informed decision can be made as to how best to manage the pressure in the space, providing a versatile computer-implemented method. For instance, based on the lower-wall sequence of events, and/or when the leak is determined to be in the lower-wall location, the computer-implemented method may comprise causing operation of one or more components of the cryogenic fluid system, such as a flow valve and/or vent valve as discussed above. This may reduce the rate of increase in pressure in the space and/or in a fluid-carrying region defined by the inner wall during the liquid backflow event.

The leak event, pressure increase event, and liquid backflow event may be characterised by respective distinct acoustic signals (such as distinct time-varying frequencies or frequency spectra) in the vacuum insulated assembly, which are sensed by the acoustic sensor. For instance, signals propagating in the space may have a particular frequency depending on the pressure of gaseous cryogenic fluid in the space, and or depending on a liquid level of cryogenic fluid in the space. The liquid backflow event may be characterised by a turbulent flow of cryogenic fluid carried by the inner wall, which may emit a distinct acoustic signal sensed by the acoustic sensor. The data received from the acoustic sensor may be indicative of the acoustic signals sensed by the acoustic sensor, and so may be indicative of the leak event, the pressure increase event, and the liquid backflow event, and thus also indicative of the submerged-crack sequence of events.

Optionally, the submerged-crack sequence of events comprises, after the liquid backflow event, a gaseous backflow event, comprising gaseous cryogenic fluid flowing through the inner wall from the space.

Causing the action to be performed based on the submerged-crack sequence of events, where the submerged-crack sequence of events comprises the gaseous backflow event, may permit an informed decision as to the specific action that is caused to be performed based on the location determined, such as whether and/or how to issue an alert, or whether and/or how to operate components of the cryogenic fluid system.

Optionally, the submerged-crack location comprises a location between the upper liquid level and a lower liquid level of cryogenic fluid in the space during the sequence of events. Determining that the leak is at the submerged-crack location between an upper and a lower liquid level of cryogenic fluid in the space during the sequence of events may permit an informed decision as to the specific action that is caused to be performed based on the location determined, such as whether and/or how to issue an alert, or whether and/or how to operate components of the cryogenic fluid system.

As discussed above, if the leak is below the liquid level of the cryogenic fluid in the space, a flow rate of liquid cryogenic fluid through a source of the leak may be less than when the leak is above a liquid level of cryogenic fluid in the space and gaseous cryogenic fluid flows through the source of the leak. If the location of the leak is between an upper and lower liquid level of cryogenic fluid in the space, then the liquid backflow event will occur and cause a liquid level in the space to drop. When the liquid level drops below the location of the leak, then gaseous cryogenic fluid in the space will instead flow through the source of the leak, during the gaseous backflow event. This may reduce a rate of increase in pressure in the space, and/or make an equalisation of pressure of cryogenic fluid at either side of the inner wall more likely, or more likely to occur sooner. This may allow a different action to be performed than if the location of the leak were to be below a lower liquid level in the space. For instance, the computer-implemented method may comprise determining that an action to cause control of a component of the cryogenic fluid system, such as a flow valve and/or vent valve as discussed above, is not required if the location of the leak is between an upper and lower level of liquid cryogenic fluid in the space, for instance because an equalisation of pressure across the inner wall is likely to occur. As such, determining that the location of the leak is between an upper and lower liquid level of cryogenic fluid in the space may provide a more versatile computer-implemented method than a method which does not determine such a location.

The gaseous backflow event may be characterised by a multi-phase flow of cryogenic fluid carried by the inner wall, and/or the formation, presence, or collapse in bubbles in cryogenic fluid carried by the inner wall. Such characterising features may cause distinct acoustic signals to be sensed by the acoustic sensor, which may be represented by the data received from the acoustic sensor.

Optionally, the submerged-crack sequence of events comprises, after the liquid backflow event, an equalisation event in which pressures on either side of the inner wall approach the same value. Optionally, in such a case, the submerged-crack location comprises a location below a lower liquid level of the liquid cryogenic fluid in the space during the sequence of events.

Optionally, the data is indicative of an open-crack sequence of events, and the computer-implemented method comprises causing the action to be performed based on the open-crack sequence of events. Optionally, the open-crack sequence of events comprises, in order: a leak event, in which cryogenic fluid flows through the inner wall into the space; a pressure increase event, in which liquid cryogenic fluid heats up, evaporates, and increases a pressure in the space; and a gaseous backflow event, in which gaseous cryogenic fluid flows through the inner wall from the space.

By performing the action based on the open-crack sequence of events, an informed decision may be taken as to the specific action that is caused to be performed based on the location determined which is tailored to the upper -leak sequence of events, such as whether and/or how to issue an alert, or whether and/or how to operate components of the cryogenic fluid system.

Optionally, the computer-implemented method comprises, based on the open-crack sequence of events, determining that the leak is at an upper-wall location in the inner wall, wherein the upper-wall location comprises a location in the inner wall above an upper level of cryogenic fluid in the space during the sequence of events. Determining that the leak is above an upper liquid level of cryogenic fluid in the space during the sequence of events may permit an informed decision to be taken as to the specific action that is caused to be performed, which is tailored to a leak at the upper-wall location

As noted above, when the leak is above a liquid level of cryogenic fluid in the space, gaseous cryogenic fluid, rather than liquid cryogenic fluid, will flow through the inner wall from the space as the pressure in the space increases above a pressure of cryogenic liquid carried by the inner wall. Gaseous cryogenic fluid may flow through a source of the leak more quickly than liquid cryogenic fluid, and so may lead to a lower increase in pressure in the space than if the leak is below a liquid level of cryogenic fluid in the space. This may reduce a likelihood of the inner wall flexing and sealing a source of the leak (thereby trapping cryogenic fluid in the space), or may reduce a likelihood of a pressure in the space exceeding a threshold pressure associated with a structural limitation of the inner and/or outer wall. Thus, a different action may be performed if the leak is above the upper liquid level of cryogenic fluid than if the leak were below the upper liquid level. As such, determining that the location of the leak is above an upper liquid level of cryogenic fluid in the space may provide a more versatile computer-implemented method than a method which does not determine such a location.

The gaseous backflow event may be characterised by a multi-phase flow of cryogenic fluid carried by the inner wall, and/or the formation, presence, or collapse of bubbles in cryogenic fluid carried by the inner wall. Such characterising features may cause distinct acoustic signals to be sensed by the acoustic sensor, which may be represented by the data received from the acoustic sensor. For instance, bubbles may collapse, such as at sonic speeds, and create signals or shockwaves that are detected by the acoustic sensor.

Optionally, the computer-implemented method comprises causing performance of the first action when the leak is at the lower-wall location, and the second action when the leak is at the upper-wall location. Optionally, the first action comprises issuance of a lower-wall alert, and the second action comprises issuance of an upper-wall alert, different to the lower wall alert.. Optionally, the lower-wall alert is a higher-priority alert than the upper-wall alert. For instance, the upper-wall alert may indicate that stresses on the inner and/or outer wall are comparatively lower than when the lower-wall alert is issued, and so the upper-wall alert may be a lower-priority alert, such as an advisory alert that does not require immediate remedial action. In contrast, the lower-wall alert may indicate that stresses on the inner and/or outer walls may be comparatively high, and so may require more immediate remedial action to be taken, such as to cause operation of components of the cryogenic fluid system to pass or divert a flow of cryogenic fluid away from the location of the leak, as discussed above.

Optionally, the data received from the acoustic sensor is indicative of a type of fluid entering or present in the space, and the method comprises causing the action to be performed based on the type of fluid entering or present in the space.

Utilising data indicative of a type of fluid that is entering or is present in the space may allow a location of the leak to be determined more quickly than, for example, determining the location based on a sequence of events, which may require the sequence of events to have occurred before such a determination is made. This may also allow the action to be performed without, or in addition to, a specific determination as to the location of the leak. For instance, the computer-implemented method may comprise issuing an alert, such as issuing the inner-wall alert, when the data is indicative of cryogenic fluid entering or being present in the space, and/or issuing the outer-wall alert when the data is indicative of the external atmosphere entering or being present in the space.

Optionally, the computer-implemented method comprises determining the type of fluid entering or present in the space based on the data. Optionally, the method comprises determining that cryogenic fluid is in the space based on the data. Optionally, the method comprises determining that the external atmosphere, and/or that liquid O2, is present in the space based on the data. Optionally, the method comprises determining that the leak is a leak in the inner wall when the data is indicative of cryogenic fluid is entering or is present in the space. Optionally, the method comprises determining that the leak is a leak in the outer wall when the data indicates that the external atmosphere is entering or is present in the space.

An acoustic signal generated by the external atmosphere flowing through the outer wall and into the space may be distinct from an acoustic signal generated by cryogenic fluid flowing through the inner wall and into the space. It may therefore not be necessary to wait until pressure has equalised to determine whether the leak is in the inner or outer wall.

An acoustic signal generated by cryogenic fluid flowing through the cryogenic fluid system, such as a flow of cryogenic fluid carried by the inner wall, may change when fluid is present in the space. Such a change in an acoustic signal caused by the presence of the external atmosphere in the space may be different to a change in an acoustic signal caused by the presence of cryogenic fluid in the space. For instance, a pressure in the space may increase more quickly, and or to a greater extent, when cryogenic fluid is in the space compared to when the external atmosphere is in the space (due to heating and evaporation of cryogenic fluid in the space). This may lead to different pressures on structural components of the vacuum-insulated assembly, such as the inner and outer walls, which may cause an associated change in the acoustic signal generated by fluid flowing through the cryogenic fluid system.

Optionally, the data is indicative of a multiphase flow of cryogenic fluid carried by the inner wall. This may be indicated by acoustic signals emitted by the formation and/or collapse of bubbles of gaseous cryogenic fluid in a stream of liquid cryogenic fluid carried by the inner wall. Optionally, the computer-implemented method comprises determining that the location of the leak is in the inner wall based on the data indicative of the multi-phase flow of cryogenic fluid carried by the inner wall. Optionally, the computer-implemented method comprises determining the presence of a multi-phase flow based on the data. Optionally, the computer-implemented method comprises determining that the location of the leak is in the inner wall based on a determination that a multi-phase flow is present. The multi-phase flow of cryogenic fluid may be caused by the gaseous backflow event, as described above, or may be caused by a local reduction in pressure in the cryogenic fluid as the leak is formed and the cryogenic fluid is exposed to the evacuated space. This may provide an early indication of the formation of a leak on the inner wall, and/or a reliable way of determining that the leak is on the inner wall.

Optionally, the acoustic sensor is mounted in the space, the data comprises acoustic signals that have travelled through fluid in the space. The acoustic signals may vary depending on the type of fluid in the space, such as depending on the mass, density, viscosity, and speed of sound associated with the type of fluid, and so the data may be indicative of the type of fluid in the space. Optionally, the acoustic sensor is isolated from vibrations of the inner and/or outer wall. Optionally, in such cases, when a vacuum is present in the space, the computer-implemented method comprises determining that there is no leak of fluid into the space when the data indicates that no, or minimal-amplitude, acoustic signals are present in the space. Optionally, the computer-implemented method comprises determining that there has been a leak when the data indicates that sufficiently large-amplitude acoustic signals are present in the space.

Optionally, the computer-implemented method comprises: receiving, from a first acoustic sensor, first data indicative of a leak in the vacuum-insulated assembly; receiving, from a second acoustic sensor that is distanced from the first acoustic sensor, second data indicative of the leak in the vacuum-insulated assembly; and causing the action to be performed based on the first data and the second data.

The nature of the leak may be better identified by the first and second data than by data from a single acoustic sensor alone. In this way, a more informed decision may be made as to the specific action that is performed than when data is received from a single acoustic sensor, such as whether and how to cause issuance of an alert, and whether and how to cause control of a component of the cryogenic fluid system.

Optionally, the computer-implemented method comprises determining the location of the leak based on the first data and the second data. By utilising two acoustic sensors, a more precise determination of the location of the leak may be determined. For instance, an acoustic signal generated by fluid flowing through the inner or outer wall into the space may be transmitted in more than one direction, such as towards each of the first and second acoustic sensors. By distancing the first and second acoustic sensors from each other, the acoustic signal may be received by the first and second acoustic sensors at different times, which may be dependent on a proximity of the leak to each of the first and second acoustic sensors. The location of the leak may be determined by comparing the inferred proximity of the leak to each of the first and second acoustic sensor, along with knowledge of a spacing between the first and second acoustic sensors.

The computer-implemented method may comprise comparing the first and second data, and determining the location of the leak based on the comparison. The inner and outer walls may be inner and outer pipes that are coaxial along a common central axis, and the location determined may be an axial location of the leak along the common central axis. In such a case, the first and second acoustic sensors may be spaced apart axially along the common central axis.

Optionally, the computer-implemented method comprises determining the axial location of the leak based on the data received from a single acoustic sensor. Optionally, the computer-implemented method comprises determining the axial location based on a frequency of the data and a flow rate of fluid through the inner pipe. For instance, for a given flow rate of cryogenic fluid through the vacuum insulated assembly, different axial locations of a leak through the inner pipe may lead to different frequencies in signals emitted by fluid leaking into the space, particularly if gaseous fluid is flowing through the inner pipe and into the space. Optionally, the determining the axial location comprises estimating a distance between the leak and the sensor, and/or a distance between the leak and geometric features of the vacuum-insulated assembly, such as a bend in the inner and/or outer pipe, based on the frequency of the data. Optionally, the data is indicative of a time for an acoustic signal to reach the sensor and/or to reach a geometric feature of the vacuum-insulated assembly. Optionally, the distance between the leak and the sensor and/or the geometric feature is determined based on the time taken, optionally in combination with a flow rate of cryogenic fluid through the vacuum-insulated assembly. The flow rate of cryogenic fluid may influence the time taken for the signals to reach the sensor, and so a change in the flow rate, such as due to a change in demand and/or due to manoeuvres of an aircraft comprising the cryogenic fluid system, may change the time taken and therefore provide an opportunity to determine the distance of the leak from the sensor and/or geometric feature(s). Optionally, the computer-implemented method comprises emitting an emission signal from an emitter. Optionally, the data is indicative of the emission signal as received by the acoustic sensor. The emission signal may change depending on the type and/or location of the leak, and so may be used to determine the type and/or location of the leak.

Optionally, the computer-implemented method comprises utilising a machine-learning model to identify the type and/or location of the leak, and/or to determine the appropriate action to be taken. The machine-learning model may comprise a neural network, such as a neural network hosted on a remote server and accessible via a wired or wireless communication. The neural network may be trained to cluster and taxonomise frequencies of the data against possible causes. The data received from the acoustic sensor may be used to further train the machine-learning model, such as the neural network.

A second aspect of the present invention provides a controller configured to perform the computer-implemented method of the first aspect of the present invention.

The controller may comprise a processor configured to execute instructions that cause the controller to perform the computer-implemented method of the first aspect of the present invention. The controller may be communicatively coupled to the acoustic sensor, such as via a wired or wireless connection, to receive the data from the acoustic sensor. Optionally, the controller is configured to receive the data from the acoustic sensor via another system, such as a remote server.

Optionally, the controller is a controller of the cryogenic fluid system, such as a controller of a hydrogen fuel system of an aircraft. Optionally, the controller is a remote controller, remote from the cryogenic fuel system, such as a controller of a flight deck of an aircraft or a controller of a ground station remote from the aircraft.

A third aspect of the present invention provides a cryogenic fluid system comprising a vacuum-insulted assembly comprising an outer wall, an inner wall within the outer wall, and a space between the inner wall and the outer wall. The inner wall is configured to carry cryogenic fluid, and the space is evacuated to provide a vacuum. The cryogenic fluid system comprises the controller of the second aspect of the present invention.

Optionally, the cryogenic fluid system comprises the acoustic sensor. Optionally, the acoustic sensor is located on the inner wall. This may allow the acoustic sensor to detect acoustic signals passing through the inner wall. Optionally, the acoustic sensor is located on a side of the inner wall external to the space, such as a side configured to carry the cryogenic fluid. This may allow the acoustic sensor to detect acoustic signals passing through the cryogenic fluid.

Locating the acoustic sensor on the inner wall may allow the acoustic sensor to detect acoustic signals that are affected by a leak along a full length of the inner wall. This may be particularly advantageous where the inner wall defines more than one vacuum interspace, in which case the acoustic signal sensed by the acoustic sensor may be indicative of a leak in any one of the more than one vacuum interspaces. Optionally, the acoustic sensor is located on the outer wall, such as within the space or external to the space.

Optionally, the cryogenic fluid system comprises a first acoustic sensor and a second acoustic sensor spaced from the first acoustic sensor. Optionally, each of the first and second acoustic sensors is located on the inner wall. Optionally, the first acoustic sensor is located on the inner wall and the second acoustic sensor is located on the outer wall. Optionally, each of the first and second acoustic sensors is located on any one of: a side of the inner wall external to the space; a side of the inner wall within the space; a side of the outer wall external to the space; and a side of the outer wall within the space. Optionally, each of the first and second acoustic sensors is located on a respective different one of: a side of the inner wall external to the space; a side of the inner wall within the space; a side of the outer wall external to the space; a side of the outer wall within the space.

Optionally, the cryogenic fluid system comprises a cryogenic fluid storage tank. Optionally, the inner wall is an inner wall of the cryogenic fluid tank and the outer wall is an outer wall of the cryogenic fluid tank. Optionally, the inner wall defines a cavity in which cryogenic fluid is stored. Optionally, the cryogenic fluid system comprises a vacuum-insulated assembly. Optionally, the vacuum-insulated assembly comprises inner and outer pipes defined by the inner and outer walls, respectively. Optionally, the space is defined between the inner and outer pipes.

Optionally, the cryogenic fluid system comprises the vent valve and/or the relief valve. Optionally, the vent valve and/or relief valve comprises a nominal (i.e., passive) pressure relief valve, an actuated pressure relief valve, a rupture disc, or a thermally actuated pressure relief valve.

Optionally, the cryogenic fluid system is configured to handle cryogenic hydrogen. Optionally, the cryogenic fluid system is a hydrogen fuel system, such as an aircraft hydrogen fuel system.

A fourth aspect of the present invention provides an aircraft hydrogen fuel system comprising the controller of the second aspect of the present invention or the cryogenic fluid system of the third aspect of the present invention.

A fifth aspect of the present invention provides an aircraft comprising the controller of the second aspect of the present invention, the cryogenic fluid system of the third aspect of the present invention, or the aircraft hydrogen fuel system of the fourth aspect of the present invention.

Optional features of any one of the aspects of the present invention may be applied equally to any other one of the aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of an aircraft;
Figure 2 shows a schematic view of a hydrogen fuel system of the aircraft;
Figure 3 shows a further schematic view of the hydrogen fuel system;
Figures 4 to 7 show a vacuum-insulated pipe of the hydrogen fuel system in various leak scenarios; and
Figure 8 shows an example computer-implemented method.

### DETAILED DESCRIPTION

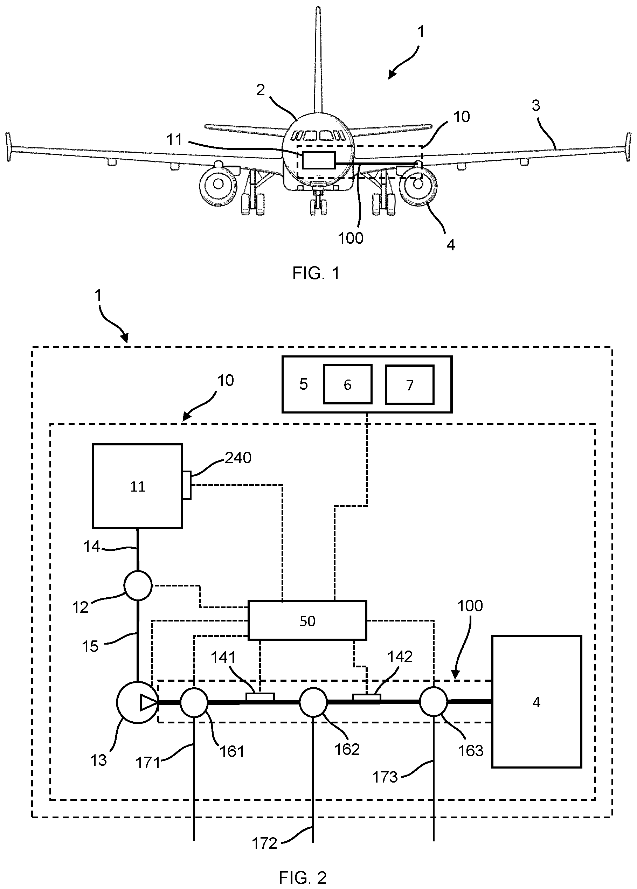

Figure 1 shows an example aircraft 1 comprising a fuselage 2, a wing 3, and an engine 4 mounted on the wing 3. The aircraft 1 comprises a hydrogen fuel system 10 comprising a hydrogen fuel tank 11 storing cryogenic hydrogen fuel. The hydrogen fuel system 10 comprises a vacuum-insulated pipe assembly 100 fluidically connected between the hydrogen fuel tank 11 and the engine 4 (here shown as a single line, for ease of comprehension). The vacuum-insulated pipe assembly 100 is configured to provide hydrogen fuel to the engine 4 from the hydrogen fuel tank 11. The hydrogen fuel tank 11 is located in the fuselage 2, and the vacuum-insulated pipe assembly 100 extends from the fuselage 2 along the wing 3 of the aircraft 1 to the engine 4.

The engine 4 comprises a combustion engine, but in other examples, the engine 4 may comprise a hydrogen fuel cell, which may generate electricity for powering a propulsor of the aircraft 1. Whilst the below discussion relates to a hydrogen fuel tank 11 and vacuum-insulated pipe assembly 100 fluidically connected to an engine 4 of an aircraft 1, in other examples, the hydrogen fuel tank 11 and/or vacuum-insulated pipe assembly 100 of the hydrogen fuel system 10 may instead be employed in any other suitable system, such as a refuel system for refuelling another hydrogen fuel tank, such as a hydrogen fuel tank of another aircraft, or to defuel liquid hydrogen from the aircraft 1 to a ground vehicle. For instance, in some examples, the vacuum-insulated pipe assembly 100 may be a hydrogen fuel pipe that is used to refuel the hydrogen fuel tank 11. In some such examples, the vacuum-insulated pipe assembly 100 may extend from a ground refuelling interface to the hydrogen fuel tank 11, which in various examples may be installed in the wing 3 or along the fuselage 2. In some examples, the hydrogen fuel tank 11 and/or the vacuum-insulated pipe assembly 100 may be employed in a cryogenic fluid distribution system that is not installed on an aircraft 1, and/or that carries a cryogenic fluid other than hydrogen.

The aircraft 1 and hydrogen fuel system 10 are shown in more detail in Figure 2. The aircraft 1 comprises a flight deck unit 5 located in a flight deck of the aircraft 1. The flight deck unit 5 comprises a flight deck display 6, which here is a screen, and a speaker 7. The hydrogen fuel system 10 comprises the hydrogen fuel tank 11 storing the cryogenic hydrogen fuel for the engine 4. The hydrogen fuel system 10 also comprises a tank valve 12, a pump 13, a first vacuum-insulated pipe 14 fluidically connecting the valve 12 to the hydrogen fuel tank 11, and a second vacuum-insulated pipe 15 fluidically connecting the pump 13 to the valve 12.

The hydrogen fuel system 10 comprises the vacuum-insulated pipe assembly 100 fluidically connecting the pump 13 to the engine 4, first, second and third vent valves 161, 162, 163 coupled to the vacuum-insulated pipe assembly 100, a first vent line 171 coupled to the first valve 161, a second vent line 172 coupled to the second vent valve 162, and a third vent line 173 coupled to the third vent valve 163. The first, second and third vent lines 171, 172, 173 fluidically connect the first, second, and third vent valves 161, 162, 163, respectively, to an atmosphere external to the aircraft 1.

The hydrogen fuel system 10 also comprises a fuel tank microphone 240 connected to the fuel tank 11, and first and second pipe microphones 141, 142 connected to the vacuum-insulated pipe assembly 100. The hydrogen fuel system 10 comprises a controller 50 communicatively coupled to the tank valve 12, the pump 13, each of the first to third vent valves 161, 162, 163, the tank microphone 240, each of the first and second pipe microphones 141, 142, and the flight deck unit 5 of the aircraft 1.

The tank valve 12 is operable by the controller 50 to selectively fluidically connect the hydrogen fuel tank 11 to the pump 13. The controller 50 is configured to send signals to the pump 13 and the tank valve 12 to operate the pump 13 and tank valve 12 to selectively cause hydrogen fuel to flow from the hydrogen fuel tank 11 to the engine 4 via the vacuum-insulated pipe assembly 100.

It will be appreciated that the arrangement shown in Figure 2 is exemplary only, and that in other examples the hydrogen fuel system 10 may comprise any other suitable arrangement of pumps, valves, vacuum-insulated pipe assemblies and/or other components for distributing fuel in the hydrogen fuel system 10.

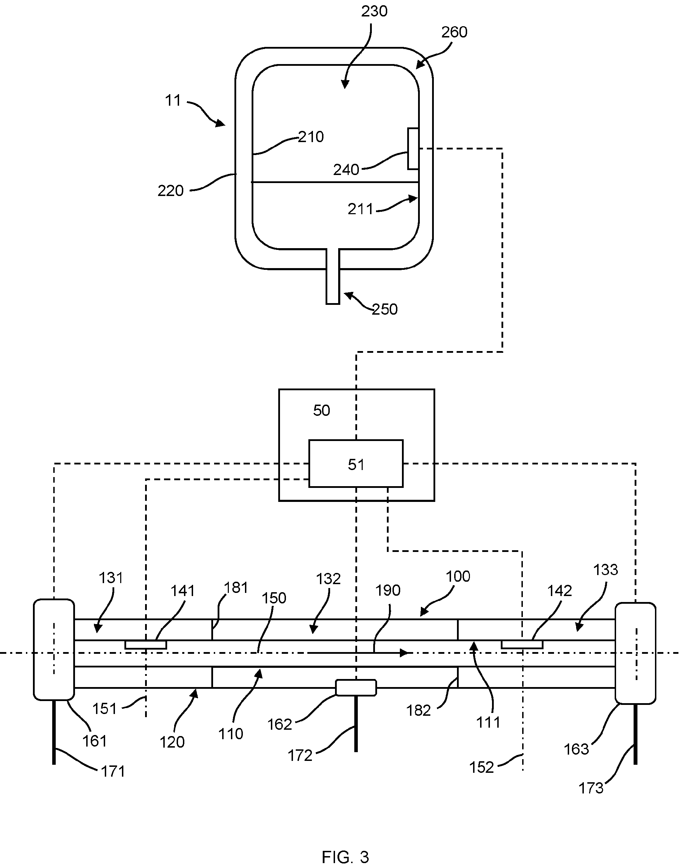

Figure 3 shows the hydrogen fuel system 10, and in particular the hydrogen fuel tank 11, the controller 50, and the vacuum-insulated pipe assembly 100 in more detail. For visual clarity, the tank valve 12, pump 13, and the first and second vacuum-insulated pipes 14, 15 are not shown in Figure 3.

The controller 50 comprises a processor 51 that is communicatively coupled to the tank microphone 240, the first and second pipe microphones 141, 142, and each of the first, second and third vent valves 161, 162, 163. It will be understood that a reference herein to actions performed by the controller 50 are actions performed by the processor 51 of the controller 50, but in other examples such actions may be performed by any other part of the controller 50, such as another processor of the controller 50.

The hydrogen fuel tank 11 is a vacuum-insulated tank comprising an inner shell 210, an outer shell 220 surrounding the inner shell 220, and a tank space 260 defined between the inner shell 210 and the outer shell 220. The inner shell 210 defines a cavity 230 in which the hydrogen fuel is stored. The tank space 260 is evacuated to provide a vacuum. The vacuum provides a thermal barrier that limits a transfer of heat between the hydrogen fuel in the cavity 230 and an external atmosphere external to the outer shell 220. The hydrogen fuel tank 11 comprises a fuel tank outlet 250 through which hydrogen fuel is flowable from the cavity 230 to the first vacuum-insulated pipe 14. The tank microphone 240 is located in the cavity 230 and is connected to an internal surface 211 of the inner shell 210, on an opposite side of the inner shell 210 to the tank space 260. In other examples, the tank microphone 240 may be located in the tank space 260, or on an external surface of the hydrogen fuel tank 11. The tank microphone 240 is a Bluetooth^{™} microphone that is wirelessly communicatively coupled to the controller 50. In other examples, the tank microphone 240 may be any other suitable microphone, such as a wireless (e.g., utilising Wi-Fi) or wired microphone.

The vacuum-insulated pipe assembly 100 comprises an outer pipe 120 and an inner pipe 110 within the outer pipe 120. The inner and outer pipes 110, 120 are concentric about a common central axis 150. The inner pipe 110 is fluidically coupled to the pump 13 and the engine 4 (not shown in Figure 3), and is configured to carry hydrogen fuel through the vacuum-insulated pipe assembly 100. The vacuum-insulated pipe assembly 100 comprises first, second, and third pipe spaces 131, 132, 133 defined between the inner pipe 110 and the outer pipe 120. The first, second, and third pipe spaces 131, 132, 133 are annular spaces between the inner and outer pipes 110, 120. The vacuum-insulated pipe assembly 100 comprises a first annular wall 181 separating and fluidically isolating the first and second pipe spaces 131, 132 from each other, and a second annular wall 182 separating and fluidically isolating the second and third pipe spaces 132, 133 from each other. Each of the first, second and third pipe spaces 131, 132, 133 is evacuated to provide a vacuum. The vacuum in each of the first, second, and third pipe spaces 131, 132, 133 provides a thermal barrier that limits a transfer of heat between hydrogen fuel flowing through the inner pipe 110 and an external atmosphere external to the outer pipe 120.

The first pipe microphone 141 is located in the inner pipe 110 and is connected to an internal surface 111 of a portion of the inner pipe 110 that defines the first pipe space 131. The second pipe microphone 141 is located in the inner pipe 110 and is connected to a portion of the inner pipe 110 that defines the third pipe space 133. Each of the first and second pipe microphones 141, 142 is a Bluetooth ^{™} microphone that is wirelessly communicatively coupled to the controller 50. In other examples, the first and/or the second pipe microphone 141, 142 may be any other suitable microphone, such as a wireless (e.g., utilising Wi-Fi) or wired microphone.

The first vent valve 161 is fluidically connected to the inner pipe 110 and defines an end wall of the first space 131, opposite to the first annular wall 181. The second vent valve 163 is fluidically connected to the inner pipe 110 and defines an end wall of the third space 133, opposite to the second annular wall 182. The second vent valve 162 is fluidically connected to the second space 132 through the outer pipe 120.

The first vent valve 161 is operable by the controller 50 to selectively fluidically couple the inner pipe 110 to the first vent line 171. The third vent valve 163 is operable by the controller 50 to selectively fluidically couple the inner pipe 110 to the third vent line 173. The second vent valve 162 is operable by the controller 50 to selectively fluidically connect the second space 132 to the second vent line 172. It will be appreciated that, in other examples, similar valves and vent lines to the second vent valve 162 and second vent line 172 may be fluidically connected to the first and third spaces 131, 133, but are not shown or described in this example for brevity.

The tank microphone 240 senses acoustic signals in the hydrogen fuel tank 11, and in particular acoustic signals that propagate through the cryogenic hydrogen fuel in the cavity 230 and/or through the inner shell 210. The tank microphone 240 transmits the acoustic signals sensed by the tank microphone 240 to the controller 50, and specifically to the processor 51 of the controller 50. The first and second pipe microphones 141, 142 each sense acoustic signals in the vacuum-insulated pipe assembly 100, and in particular sense acoustic signals that propagate through the inner pipe 110 and through hydrogen fuel flowing through the inner pipe 110, in use. The acoustic signals sensed by the first and second pipe microphones 141, 142 are transmitted to the controller 50, and specifically to the processor 51.

As will be described in more detail with respect to various scenarios below, the controller 50 receives the acoustic signals sensed by the tank microphone 240 and the first and second pipe microphones 141, 142, and determines, based on characteristics of the received acoustic signals, whether there is a leak in the hydrogen fuel tank 11 and/or in the vacuum-insulated pipe assembly 100. The controller 50 also determines the location of the leak in the hydrogen fuel system 10, causes issuance of alerts via the flight deck unit 5, and takes remedial action in the event of a leak, including causing operation of the tank valve 12, the pump 13, and any of the first to third vent valves 161, 162, 163, as appropriate.

In a first scenario, the controller 50 sends signals to the pump 13 and the tank valve 12 to cause the pump 13 to operate and to cause the tank valve 12 to open, so that hydrogen fuel is caused to move from the hydrogen fuel tank 11 through the vacuum-insulated pipe assembly 100 by the pump 13. This represents a "normal" operation of the hydrogen fuel system 30, and is illustrated in Figure 3 by an arrow 190 representing a flow of hydrogen fuel through the inner pipe 110. Operation of the pump 13 causes the pump 13 to vibrate, and these vibrations generate acoustic signals that propagate through the hydrogen fuel system 10. Similarly, movement of hydrogen fuel through the hydrogen fuel system 10, including through the fuel tank outlet 250 and through the inner pipe 110, induces vibrations and generates acoustic signals that propagate through the hydrogen fuel system 10. Another source of acoustic signals may be electrical heaters in the hydrogen fuel system 10, particularly if such electrical heaters rely on an AC current. Yet a further source of acoustic signals may be a heat exchanger system of the hydrogen fuel system 10. For instance, a heat-exchange system that circulates heat exchanger fluid, such as ethylene glycol water, to introduce heat to the cryogenic fluid system, may have a pump in its circuit that may produce acoustic signals. Such acoustic signals may be introduced into the tank, particularly if a side of the heat exchanger that carries hydrogen fluid is located inside the tank. If the hydrogen is instead provided to the heat exchanger via pipes, then the acoustic signals may travel through these pipes before reaching the tank. In any event, the acoustic signals are sensed by the tank microphone 240 and each of the first and second pipe microphones 141, 142, and are transmitted to the processor 51 of the controller 50.

The acoustic signals generated during such "normal" operation (i.e., in the absence of any leaks) in the first scenario have distinct, characteristic frequency spectra, or "fingerprints". Similarly, as will be described below, acoustic signals generated in the hydrogen fuel system 10 in the event of a leak in the hydrogen fuel system 10 have similar identifiable fingerprints. The controller implements a detection loop that uses the tank microphone 240 and first and second pipe microphones 141, 142 to detect the acoustic signals, and filters the frequencies to identify the fingerprints. The controller 50 then determines what events, or sequences of events, the fingerprints are indicative of by comparing the fingerprints to known, or expected, fingerprints for particular events or sequences of events.

In the first scenario, the controller 50 identifies fingerprints of the acoustic signals received from the first and second pipe microphones 141, 142 during the normal operation, and determines that the fingerprints are indicative of the normal operation of the hydrogen fuel system 10. The controller 50 then determines that the hydrogen fuel system 10 is operating normally, and that there are no leaks.

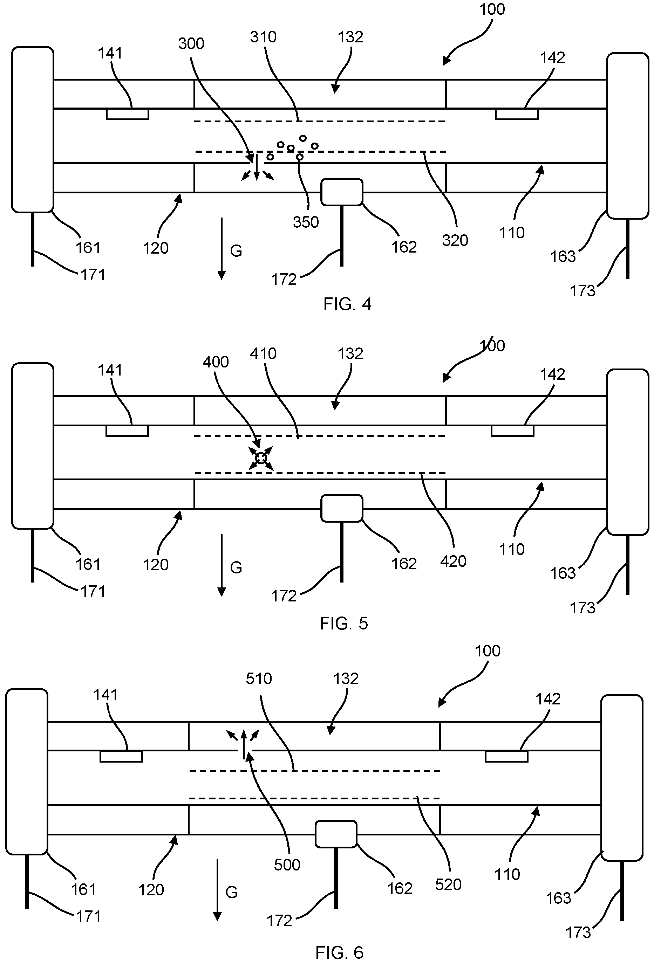

Figure 4 illustrates a configuration of the vacuum-insulated pipe assembly 100 in a second scenario, in which a submerged-crack sequence of events occurs. In the second scenario, and in each other scenario described herein, features of the hydrogen fuel system 100 are given the same reference numerals as in each other scenario, for ease of understanding.

The submerged-crack sequence of events starts with the formation of a lower crack 300 located on a lower surface of the inner pipe 110 relative to a direction of gravity G. The existence of the lower crack 300 leads to a local low-pressure region in the hydrogen fuel carried in the inner pipe 110 in proximity to the lower crack 300. This low-pressure region causes local evaporation of the hydrogen fuel carried in the inner pipe 110, which results in a formation and subsequent collapse of bubbles 350 in the hydrogen fuel carried in the inner pipe 110.

Liquid hydrogen fuel that is flowing through the inner pipe 110 leaks through the lower crack 300 and pools in the second space 132. Over time, a liquid level of the hydrogen fuel in the second space 132 increases towards maximum liquid level 310 in the second space 132 during the submerged-crack sequence of events, and the lower crack 300 becomes submerged in the liquid hydrogen fuel in the second space 132.

The hydrogen fuel in the second space 132, which is now in contact with the outer wall 120, experiences increased heat transfer with the external atmosphere across the outer wall 120 compared to when the hydrogen fuel is separated from the outer wall by the vacuum in the second space 132. The liquid hydrogen in the second space 132 evaporates due to the increased heat transfer, which increases a pressure in the second space 132. Eventually, the pressure in the second space 132 exceeds a pressure of the hydrogen fuel carried in the inner pipe 110. In this case, because the lower crack 300 is located below the liquid level of hydrogen fuel in the second space 132, a pressure difference between the hydrogen fuel in the second space 132 and the hydrogen fuel carried in the inner pipe 110 causes liquid hydrogen fuel to flow back through the lower crack 300 and into the main flow of cryogenic liquid hydrogen 110 carried in the inner pipe.

A flow rate of liquid hydrogen fuel into the inner pipe 110 from the second space 132 is restricted due to throttling effects through the lower crack 300. This limits a rate of reduction in pressure in the second space 132 that is caused by the liquid hydrogen fuel flowing back through the lower crack 300. For this reason, in the second scenario, a rate of increase in pressure in the second space 132 due to evaporation of the hydrogen fuel in the second space 132 is greater than a rate of reduction in pressure due to flow of hydrogen fuel through the lower crack 300 from the second space 132. This causes a pressure in the second space 132 to continue to increase. As liquid hydrogen evaporates, and flows through the lower crack 300 and leaves the second space 132, the liquid level of hydrogen fuel in the second space 132 reduces towards a minimum liquid level 320 in the second space 132 for the submerged-crack sequence of events. In this scenario, the lower crack 300 remains below the minimum liquid level 320 of the hydrogen fuel in the second space 132, and so no gaseous hydrogen fuel flows through the lower crack 300 from the second space 132.

The fingerprints of the acoustic signals sensed by the first and second pipe microphones 141, 142vary throughout the submerged-crack sequence of events. In particular, the initial formation of the lower crack 300 itself emits acoustic signals that have fingerprints indicative of the formation of the lower crack 300. The formation and collapse of bubbles in the hydrogen fuel carried in the inner pipe 110 following the formation of the lower crack 300 generate acoustic signals that have fingerprints indicative of the formation and collapse of bubbles in the hydrogen fluid carried in the inner pipe 110. Such collapse of bubbles may result in metal erosion at the crack location, which may have a distinct fingerprint, and/or may change a shape of the crack, which may accordingly change an acoustic fingerprint associated with flow through the crack. Similarly, the flow of hydrogen fuel through the lower crack 300 from the inner pipe 110 to the second space 132 emits acoustic signals that have fingerprints indicative of the flow of hydrogen fuel through the lower crack 300.

As the pressure in the second space 132 increases due to evaporation of hydrogen fuel in the second space 132, a stress on the inner and outer pipes 110, 120 changes. For instance, absent the leak, the inner pipe 110 experiences stresses acting circumferentially outwardly from the common central axis 150, due to the relatively high pressure of hydrogen fuel flowing through the inner pipe 110 and the comparatively low-pressure vacuum in the second space 132. During the submerged-crack sequence of events, as the pressures at either side of the inner pipe 110 equalise, and/or as the pressure in the second space 132 exceeds the pressure of hydrogen fuel carried in the inner pipe 110, the stresses on the inner pipe 110 will instead act circumferentially inwardly relative to the common central axis 15. This change in the direction of stress in the inner pipe 110 changes how the inner pipe 110 vibrates and propagates an acoustic signal during operation of the hydrogen fuel system 10. Thus, fingerprints of the acoustic signals received by the controller 50 during the period of increasing pressure in the second space 132 change over time, and are indicative of the pressure increasing in the second space 132.

The controller 50 identifies fingerprints in the acoustic signals received from the first and second pipe microphones 141, 142during the submerged-crack sequence of events, and determines that the fingerprints are indicative of the submerged-crack sequence of events. This is by the controller 50 determining that the fingerprints of the acoustic signals received from the first and second pipe microphones 141, 142comprise, in temporal order, fingerprints indicative of formation of the lower crack 300, fingerprints indicative of the flow of hydrogen fuel through the lower crack 300, and fingerprints indicative of the increase in pressure in the second space 132. In response to the determination that the fingerprints are indicative of the submerged-crack sequence of events, the controller 50 determines that the leak is in the inner pipe 110, and specifically in a location on the inner pipe 110 that is below both the maximum and minimum liquid levels 310, 320 of hydrogen fuel in the second space 132 during the submerged-crack sequence of events.

In the event of a such a leak below the minimum liquid level 320 of hydrogen fuel in the second space 132, pressures observed in the second space 132 are likely to be higher than if gaseous hydrogen fuel were to flow back through the lower crack 300. This is because liquid hydrogen fuel flows through the lower crack 300 more slowly than gaseous hydrogen fuel would, and so relieves pressure in the second space 132 at a lower rate. This increases a likelihood of high pressures developing in the second space 132 when the leak is at a location below the minimum level 320 of liquid hydrogen fuel in the second space 132 than when the leak is at a location above the minimum level 320. This may, in turn, increase a risk of deformation of the inner and/or outer pipe 110, 120. Such a deformation may restrict a flow of hydrogen fuel through the inner pipe 110 such as towards the first and/or third vent valves 161, 163 from the location of the lower crack 300. In the event of a closure of the lower crack 300, such as due to changes in stress on the inner pipe 110 as the pressure in the second space 132 increases, hydrogen fuel may become trapped in the second space 132.

Thus, when the controller 50 determines that the fingerprints are indicative of the submerged-crack sequence of events, the controller 50 sends signals to the flight deck unit to cause the flight deck display 6 to issue a high-priority visual alert, and to cause the speaker to issue a high-priority audible alert. The high-priority visual alert here is a flashing indicator on the display, and the high-priority audible alert is a repeating alarm. The high-priority nature of the visual and audible alerts indicates to flight crew that immediate remedial action should be (or has been) taken, including to vent the inner pipe 110 and the second space 132 via the first to third vent lines 171, 172, 173.

In particular, the controller 50 sends signals to both the first and third vent valves 161, 163 to operate the first and third vent valves 161, 163 to fluidically couple the inner pipe 110 to the first and third vent lines 171, 173, respectively. This allows hydrogen fuel in the inner pipe 110 to be vented to the external atmosphere, even in the event of a deformation of the inner pipe 110 that restricts fluid flowing towards the first and/or third vent valve 161, 163 through the inner pipe 110. The controller 50 also causes operation of the second vent valve 162 to fluidically couple the second space 132 to the external atmosphere via the second vent line 172, thereby to vent hydrogen fuel in the second space 132 to the external atmosphere. This is to reduce a rate of increase in pressure in the second space 132. The controller also instructs the pump 13 to stop operating and instructs the tank valve 12 to close, to reduce an amount of hydrogen fuel flowing to and through the inner pipe 110, and thereby reduce an amount of fuel leaking into the second space 132. Other remedial actions performed by the controller 50 and/or flight crew will be appreciated by the skilled person.

Figure 5 shows a third scenario, in which a semi-submerged-crack sequence of events occurs. This scenario is the same as the second scenario, except that a middle crack 400 is formed in a portion of the inner pipe 110 that is below a maximum liquid level 410 of hydrogen fuel in the second space 132 during the semi-submerged-crack sequence of events, and above a minimum liquid level 420 of hydrogen fuel in the second space 132 during the semi-submerged-crack sequence of events. As the pressure in the second space 132 increases, liquid hydrogen fuel is first pushed back through the middle crack 400 into the inner pipe 110 from the second space 132. This, along with evaporation of the hydrogen fuel in the second space, causes the liquid level of hydrogen fuel in the second space 132 to drop below the location of the middle crack 400. This exposes the middle crack 400 to gaseous hydrogen fuel in the second space 132.

Initially, when the liquid level of hydrogen fuel in the second space 132 reaches the location of the middle crack 400, a mixture of gaseous and liquid hydrogen fuel flows through the middle crack 400 from the second space 132. Eventually, when the liquid level of hydrogen fuel in the second space 132 drops below the location of the middle crack 400, only gaseous hydrogen fuel flows through the middle crack 400 from the second space 132.

The mixture of gaseous and liquid hydrogen fuel flowing through the middle crack 400 from the second space 132 emits acoustic signals having fingerprints that are indicative of the mixture of gaseous and liquid hydrogen flowing through the middle crack 400. Similarly, the gaseous hydrogen fuel flowing through the middle crack 400 from the second space 132 emits acoustic signals that have fingerprints indicative of the gaseous hydrogen fuel flowing through the middle crack 400. Moreover, gaseous hydrogen fuel flowing through the middle crack 400 from the second space 132 and into a primary flow of liquid hydrogen fuel carried in the inner pipe 110 causes multi-phase flow conditions in the primary flow. This also causes the formation and collapse of bubbles of gaseous hydrogen fuel in the primary flow. Such multi-phase flow conditions and collapsing bubbles emit acoustic signals that have fingerprints indicative of gaseous hydrogen fuel flowing through the middle crack 400 in a direction from the second space 132 to the inner pipe 110.

The controller 50 identifies fingerprints of the acoustic signals sensed by and received from the first and second pipe microphones 141, 142during the semi-submerged-crack sequence of events, and determines that the fingerprints are indicative of the occurrence of the semi-submerged-crack sequence of events. This is by the controller 50 determining that the fingerprints comprise, in temporal order, fingerprints indicative of the formation of the middle crack 400, fingerprints indicative of a flow of hydrogen fuel through the middle crack 400, fingerprints indicative of an increase in pressure in the second space 132, fingerprints indicative of a mixture of liquid and gaseous hydrogen fuel flowing through the middle crack 400, and fingerprints indicative of gaseous hydrogen fuel flowing through the middle crack 400. When the controller 50 determines that the fingerprints of the acoustic signals are indicative of the occurrence of the semi-submerged-crack sequence of events, the controller 50 determines that the leak is in the inner pipe 110, and specifically in a location on the inner pipe 110 that is between the maximum and minimum liquid levels 410, 420 of hydrogen fuel in the second space 132 during the semi-submerged-crack sequence of events.

A rate of decrease in pressure in the second space 132, due to a flow of hydrogen fuel through the middle crack 400 into the inner pipe 110 is higher in the semi-submerged-crack sequence of events than in the submerged-crack sequence of events, at least because gaseous hydrogen fuel is better able to flow through the middle crack 400 than liquid hydrogen fuel is able to flow through the lower crack 300. Thus, maximum pressures in the second space 132 are lower in the semi-submerged-crack sequence of events than in the submerged-crack sequence of events.

Thus, when the controller 50 determines that the fingerprints of the acoustic signals are indicative of the semi-submerged-crack sequence events, the controller 50 sends signals to the flight deck unit 5 to cause the flight deck display 6 to display a mid-priority visual alert, and to cause the speaker 7 to issue a mid-priority audible alert. The mid-priority visual and audible alerts are of lower priority than the high-priority visual and audible alerts issued in the second scenario. The mid-priority visual alert comprises a non-flashing notification on the flight deck display 6, and the audible alert comprises a non-repeating alarm sounded by the speaker 7. This provides a suitable warning to the flight crew alerting them to the leak whilst indicating that they need not take immediate remedial action.

The controller 50 sends signals to the second vent valve 162 to cause the second vent valve 162 to fluidically couple the second space 132 to the second vent line 172. The controller 50 also sends signals to the third vent valve 163 to cause the third vent valve 163 to fluidically couple the inner pipe 110 to the third vent line 173. The controller 50 also sends signals to the tank valve 12 and the pump 13 to stop operation of the pump 13 and close the tank valve 12 to reduce an amount of hydrogen fuel flowing through the inner pipe 110. The controller 50 does not here send signals to the first vent valve 161 to cause the first vent valve 161 to fluidically couple the inner pipe 110 to the first vent line 171, as in the second scenario. This is because, in the third scenario, lower maximum pressures are present in the second space 132 than in the second scenario, as discussed above. As such, the inner pipe 110 is less likely to deform and restrict a flow through the inner pipe. Thus, it is sufficient to simply vent hydrogen fuel from the inner pipe 110 to the external atmosphere through the third vent line 173, and not also the first vent line 171.

Figure 6 shows a fourth scenario in which an open-crack sequence of events occurs. The open-crack sequence of events comprises the formation of an upper crack 500 on an upper side of the inner piper 110 with respect to the direction of gravity G. The upper crack 500 is located above both a maximum and a minimum liquid level 510, 520 of hydrogen fuel in the second space 132 during the open-crack sequence of events. The open-crack sequence of events is similar to the submerged-crack and semi-submerged-crack sequences of events, in that liquid hydrogen fuel flows through the upper crack 500 into the second space 132, and a liquid level and pressure of hydrogen fuel increase in the second space 132. In this case, however, no (or a significantly reduced amount of) liquid hydrogen fuel flows back through the upper crack 500 as the pressure in the second space 132 increases above that of hydrogen fuel carried in the inner pipe 110. Instead, gaseous hydrogen fuel flows back into the main hydrogen fuel stream in the inner pipe 110 once pressure in the second space 132 meets and exceeds a pressure in the inner pipe 110. As noted above, gaseous hydrogen fuel is able to flow through the upper crack 400 at a higher flow rate than liquid hydrogen fuel, and so peak pressures in the second space 132 during the open-crack sequence of events may remain lower than pressures in the second space 132 in the semi-submerged-crack and submerged-crack sequences of events.

The controller 50 identifies fingerprints of the acoustic signals received from the first and second pipe microphones 141, 142 during the open-crack sequence of events, and determines that the fingerprints are indicative of the occurrence of the open-crack sequence of events. This is by the controller 50 determining that the fingerprints comprise, in temporal order, fingerprints indicative of formation of the upper crack 500, fingerprints indicative of a flow of hydrogen fuel through the upper crack 500, fingerprints indicative of an increase in pressure in the second space 132, and fingerprints indicative of gaseous hydrogen fuel flowing through the upper crack 500. Notably, unlike in the third scenario, there are here no fingerprints indicative of a mixture of liquid and gaseous hydrogen fuel flowing through the upper crack 500 before the fingerprints indicative of gaseous hydrogen fuel flowing through the upper crack from the second space 132. This is because the upper crack 500 remains above the maximum liquid level 510 in the second space 132 and never becomes submerged in liquid hydrogen fuel in the second space 132. When the controller 50 determines that the fingerprints are indicative of the occurrence of the semi-submerged-crack sequence of events, the controller 50 determines that the leak is in the inner pipe 110, and specifically in a location on the inner pipe 110 that is above the maximum liquid level 410 of hydrogen fuel in the second space 132 during the open-crack sequence of events.

When the controller 50 determines that the fingerprints are indicative of the occurrence of the open-crack sequence of events, the controller 50 sends signals to the flight deck unit 5 to cause a low-priority visual alert to be displayed in the flight deck display 6, and to cause a low-priority audible alert to be sounded by the speaker 7. The low-priority visual and audible alerts are of lower priority than the mid-priority visual and audible alerts issued in the third scenario. The low-priority visual alert is a non-flashing indicator on the flight-deck display in a different colour to the high-priority visual alert. The low-priority audible alert is a non-repeating alarm that has a different sound to the mid-priority audible alert. The low-priority visual and audible alerts indicate to the flight crew that there is a leak in the upper part of the inner pipe, and that the flight crew is unlikely to need to take remedial action in response to the leak. The controller 50 in the fourth scenario sends signals to the tank valve 12 and the pump 13 to stop operation of the pump 13 and close the tank valve 12, thereby to reduce an amount of hydrogen fuel flowing to and through the inner pipe 110. The controller 50 sends signals to the third vent valve 163 to cause the third vent valve 163 to fluidically couple the inner pipe 110 to the third vent line 173. The controller 50 here does not send signals to the second vent valve 162 to cause the second vent valve 162 to fluidically couple the second space 132 to the second vent line 172. The controller 50 also does not send signals to the first vent valve 161 to cause the first vent valve 161 to fluidically couple the inner pipe 110 to the first vent line 171. This is because lower maximum pressures are present in the second space 132 during the open-crack sequence of events than in the semi-submerged-crack and submerged-crack sequence of events. It is therefore not essential to vent the second space 132 to relieve pressure in the second space 132, and it is sufficient to vent hydrogen fuel from the inner pipe 110 to the external atmosphere through the third vent line 163, and not also through the first vent line 161.

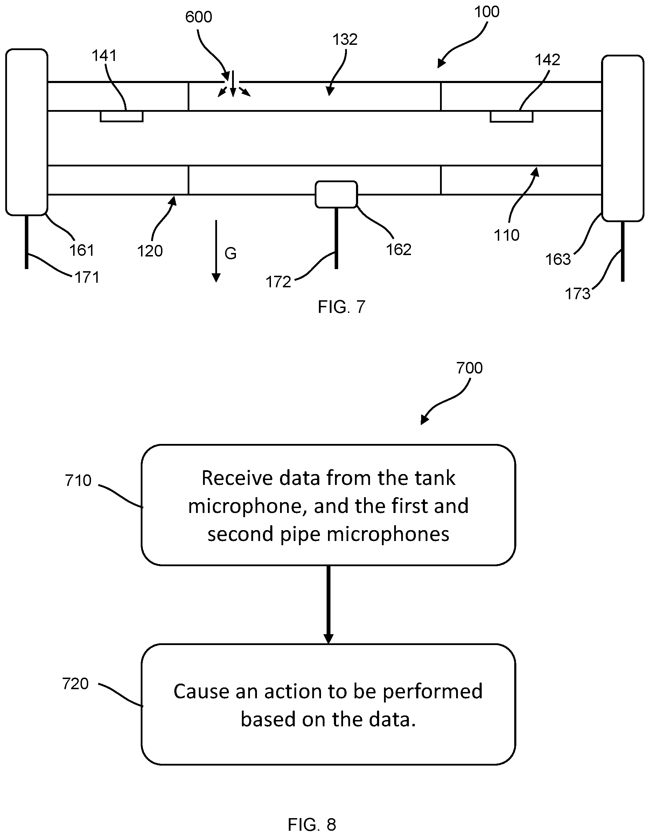

Figure 7 shows a fifth scenario, in which an outer crack 600 is present in the outer wall 120 of the vacuum-insulated pipe assembly 100, causing a leak of gas from the external atmosphere into the second space 132 through the outer pipe 120. This, in turn, increases a pressure in the second space 132.

The gas flowing through the outer crack 600 emits an acoustic signal that has a fingerprint distinct from that of hydrogen fuel flowing through a crack in the inner pipe 110. Moreover, a pressure in the second space 132, when the gas is present in the second space 132, increases to a lesser extent than when hydrogen fuel is present in the second space 132. In particular, the pressure in the second space 132 eventually becomes equal to that in the external atmosphere. This pressure provides a particular stress on the inner and outer pipes 110, 120 that is different to a stress caused by hydrogen fuel in the second space 132, whereby pressure in the second space 132 increases to a level above that of the external atmosphere. This results in a difference in the fingerprints of acoustic signals that propagate through the inner and outer pipes 110, 122, and through the gas in the second space 132, during operation of the hydrogen fuel system 10, compared to when hydrogen fuel is present in the second space 132 and compared to when the second space 132 is evacuated.

The controller 50 identifies fingerprints of acoustic signals received from the first and second microphones 141, 142 when the outer crack 600 forms and is present in the outer pipe 120. The controller determines that the fingerprints are indicative of the presence of the outer crack 600. This is by the controller determining that the fingerprints are indicative of the formation of the outer crack 600, indicative of gas flowing through the outer crack, and/or indicative that the gas is present in the second space 132. When the controller 50 determines that the fingerprints are indicative of the presence of the outer crack 700, the controller 50 determines that the crack is in the outer wall 120.

Because pressures in the second space 132 when the gas is present in the second space 132 are much lower than when hydrogen fuel is in the second space 132, the controller 50 sends signals to the flight deck unit 5 to cause issuance of the low-priority visual alert and the low-priority audible alert as discussed above for the open-crack sequence of events. The low-priority alert in this case, however, includes a visual indication that the crack is in the outer wall 120, rather than the inner wall 110. In this case also, due to the low pressures in the second space and the fact that there has been no leakage of hydrogen fuel from the inner pipe 110, there is no need to vent hydrogen fuel from the second space or the inner pipe 110. Thus, the controller 50 does not cause any remedial action to be performed, and the hydrogen fuel system 10 continues to operate as normal. In other examples, however, the controller 50 may cause any suitable remedial action to be performed as appropriate.

In each scenario discussed above, acoustic signals that are generated as fluid flows through a crack in the inner or outer pipe 110, 120 travel away from the location of the crack. If an axial location of the crack along the common central axis 150 is closer to the fist pipe microphone 141 than the second pipe microphone 142, then the signals will be sensed by the first pipe microphone 141 before they are sensed by the second pipe microphone 142. The controller 50 determines the axial location of the crack along the common central axis 150 by comparing the signals received from the first and second pipe microphones. In particular, the controller 50 is determines a time difference between the signals received from the first and second pipe microphones 141, 142. In each of the second to fourth scenarios discussed above, the controller 50 determines that the crack is in a portion of the inner pipe 110 that defines the second space 132. This allows the controller 50 to instruct operation of only the second vent valve 162, to vent the second space 132, and not also to cause operation of other valves (where present) to evacuate the adjacent first and third spaces 131, 133. If the controller 50 were instead not to determine the axial location of the leak along the common central axis 150, then the controller 50 may default to venting each of the first, second and third spaces 131, 132, 133, which would relieve the vacuum in each of the first, second and third spaces 131, 132, 133 and degrade the insulating capacity of the vacuum-insulated pipe assembly 100. Thus, by determining the axial location of the leak, a more informed decision is made by the controller 50 and/or flight crew as to the specific remedial action(s) to be performed.

The above scenarios have been described in relation to leaks in the vacuum-insulated pipe assembly 100, but similarly apply to leaks in the hydrogen fuel tank 11. For instance, whilst not shown in the Figures, a lower-tank-leak sequence of events, similar to the submerged-crack sequence of events, occurs when there is a lower-tank-crack in a lower portion of the inner shell 210 of the hydrogen fuel tank 11. The lower-tank-crack is below a minimum level of liquid hydrogen in the tank space 260 during the lower-tank-leak sequence of events. In particular, liquid hydrogen fuel flows from the cavity 230 through the lower-tank-crack into the tank space 260 and pools in the tank space 260. A liquid level in the tank space 260 rises above the lower-tank-crack. The liquid hydrogen fuel then evaporates and increases a pressure in the tank space 260, and liquid hydrogen fuel is subsequently be pushed back through the lower-tank-crack into the cavity 230. The controller 50 identifies fingerprints of acoustic signals received from the tank microphone 240, and to determine that the fingerprints are indicative of the lower-tank-leak sequence of events. In response to such a determination, the controller determines that the crack is below the minimum liquid level of hydrogen fuel in the tank space 260 during the lower-tank-leak sequence of events.

Similarly, a leak in a portion of the inner shell 210 that is between a maximum and minimum liquid level of hydrogen fuel in the tank space 260 results in a sequence of events similar to the semi-submerged-crack sequence of events. Likewise, a leak in a portion of the inner shell 210 that is above a maximum liquid level of hydrogen fuel in the tank space 260 results in a sequence of events similar to the open-crack sequence of events. In each case, the controller 50 determines the location of the leak with respect to the maximum and minimum liquid levels in the tank space 260 based on identified fingerprints of acoustic signals received from the tank microphone 260, as described above in other scenarios.

Figure 8 shows an example computer-implemented method 700 performed by the controller 50 (specifically by the processor 51 of the controller 50) described above. The computer-implemented method 700 comprises receiving 710 data from the tank microphone 240 and the first and second pipe microphones 141, 142, the data indicative of a leak in the hydrogen fuel tank 11 and/or the vacuum-insulated pipe assembly 100. The computer-implemented method 700 also comprises causing 720 an action to be performed based on the data. The action in various examples comprises issuance of any one of the high-, mid-, and low-priority audible and visual alerts discussed above, causing operation of one or more components of the hydrogen fuel system 10 as discussed above, and/or recording the data to a memory, such as a memory (not shown) of the controller 50. In various examples, the method 700 also comprises determining a location of the leak in any way as described above, such as: determining that the leak is in the hydrogen fuel tank 11 or the vacuum-insulated pipe assembly 100, determining that the leak is in the inner pipe 110 or the outer pipe 120 of the vacuum-insulated pipe assembly 100; determining that the leak is in the inner shell 210 or the outer shell 220 of the hydrogen fuel tank 11; determining a location of the leak in the inner pipe 110 with respect to the direction of gravity G; determining an axial location of the leak in the inner pipe 110 along the common central axis 150; and/or determining a location of the leak in the inner shell 210 with respect to the direction of gravity G.

Whilst not shown in the Figures, the controller 50 comprises a non-transitory computer-readable storage medium. The non-transitory computer-readable storage medium stores instructions which, if executed by the processor 51 of the controller 50, cause the processor 51 to perform the method 700 described above with reference to Figure 8.

Example embodiments of the present invention have been discussed, with particular reference to the examples illustrated. However, it will be appreciated that variations and modifications may be made without departing from the scope of the invention as defined by the appended claims.

For instance, in the first scenario, signals generated externally to the vacuum-insulated pipe assembly 100 or the hydrogen fuel tank 11 (such as signals generated by the pump 13 or components external to the hydrogen fuel system 10 as a whole) do not pass through the first, second or third pipe spaces 131, 132, 133, nor the tank space 260, because those spaces are initially evacuated of fluid. Thus, any such signals detected by the tank microphone 240 and the first and second pipe microphones 141, 142, e.g., due to transmission along structural components of the hydrogen fuel system 11, would be of low amplitude in the first scenario. In each of the second to fifth scenarios, in contrast, fluid is present in the second pipe space 132, and so such externally-generated signals will be able to pass through the second pipe space 132. This may lead to a gradual increase in amplitude of such signals detected by the first and second pipe microphones 141, 142 as pressure in the second space 132 increases. Similar comments apply with respect to a leak that causes fluid to be present in the tank space 260. In this way, a leak may be detected by the appearance or increase in amplitude of certain signals detected by the tank microphone 240 or first and second pipe microphones 141, 142. Moreover, a rate of increase in amplitude of such signals may be used to determine a magnitude (e.g., a flow rate through a crack or a rate of increase in pressure in a space) of the leak.

Fluid that is farther away from the hydrogen fuel tank 11 may be at a higher temperature than fluid that is closer to the hydrogen fuel tank 11, and so fluid farther away from the fuel tank may be more susceptible to boiling and cavitation. Thus, the location of the leak relative to the fuel tank may be determined based on whether or not the acoustic signals indicate the present of cavitation. Such cavitation may also be present for a greater duration when the leak is downstream of a flow control device (such as the tank valve 12) than when the leak is upstream of such a flow control device. Thus, the location of a leak may be determined to be upstream of a flow control device if, for example, the duration of cavitation is below a duration threshold, and downstream of a flow control device if the duration of cavitation is equal to or greater than the duration threshold (or another threshold).

In some examples, the vacuum-insulated pipe assembly 100 comprises first to third relief valves (not shown) that are openable to fluidically connect the respective first, second and third pipe spaces 131, 132, 133 to the main flow through the inner pipe 110. In some examples such relief valves comprise rupture discs that rupture in response to a pressure in the respective space that is sufficiently greater than a pressure in the inner pipe 110. In other examples, such relief valves are electronically actuated valves that are operated by signals from the controller 50, or nominal pressure relief valves that open and/or close automatically as pressure in the respective pipe space 131, 132, 133 increases and decreases relative to the pressure in the inner pipe 110. In any event, such relief valves allow pressure in the respective pipe space 131, 132, 133 to be equalised more quickly with a pressure in the inner pipe 110, and/or may allow fluid in the respective pipe space 131, 132, 133 to be more easily removed from the respective space, particularly in the event of a leak caused by a small crack that restricts a flow of hydrogen fuel therethrough.

In some examples, the controller 50 determines whether there is a leak into only one, or more than one, of the first, second and third pipe spaces 131, 132, 133. In some examples, the controller 50 continues normal operation of the hydrogen fuel system 10 if there is a leak into only one of the first, second and third pipe spaces 131, 132, 133, and causes operation of the first vent valve 171 to diver flow away from the inner pipe 100 in the event of a leak into more than one of the first, second and third pipe spaces 131, 132, 133. This may be the case when, for instance, hydrogen fuel of a suitable quality can still be supplied to the engine 4 in the event of a loss of vacuum in one of the first, second and third pipe spaces 131, 132, 133, but not in the event of a loss of vacuum in more than one of the first, second and third pipe spaces 131, 132, 133.

In some examples, the first pipe microphone 141 is mounted in one of the first, second and third pipe spaces 131, 132, 133, and is isolated from vibrations of the inner and outer pipes 110, 120. In some such cases, in the first scenario, no or only very low magnitude signals will reach the first pipe microphone 141 due to the vacuum in the respective pipe space 131, 132, 133, and in such a case the controller 50 may determine that there are no leaks. In the event of a leak into the respective pipe space 131, 132, 133, signals will reach the first pipe microphone 141 and gradually increase in amplitude as pressure in the space increases. In some such examples, the controller 50 determines that there is a leak of fluid into that respective pipe space 131, 132, 133 when such signals are detected in the respective pipe space 131, 132, 133. Similar comments apply to other examples, in which the second pipe microphone 142 is mounted in the or another one of the first, second and third pipe spaces 131, 132, 133, and/or ion which the tank microphone 240 is mounted in the tank space 260.

It is described above how the first and second pipe microphones 141, 142 may together be used to determine an axial location of the leak. In other examples, only one of the first and second pipe microphones 141, 142 may be required to determine the axial leak. For instance, with knowledge of a flow rate of fluid through the inner pipe, and a time taken for signals to pass from the leak to the first or second pipe microphone 141, 142, a distance of the leak from the first or second pipe microphone 141, 142 may be determined.

It will be appreciated that the acoustic signal detected by the acoustic sensor may be an acoustic signal that travels in the first, second, or third space 131, 132, 133 in the event of a leak of fluid into the respective first, second or third space 131, 132, 133. As the pressure and density of fluid in the respective space 131, 132, 133 change due to the leak, characteristics of acoustic signals that pass through the space 131, 132, 133, from any source, may change. For instance, for a particular pressure and density of fluid in the space 131, 132, 133, a size, such as a length, of the space 131, 132, 133, and/or a location of a source of the leak into the space 131, 132, 133, the fluid in the space 131, 132, 133 may have a characteristic resonant frequency. The acoustic signal passing through the fluid in the space 131, 132, 133 may cause the fluid to vibrate at the resonant frequency, particularly if the acoustic signal comprises a harmonic of the resonant frequency. In some examples, the controller 50 is configured to identify the resonant frequency, and to determine, based on the resonant frequency and a known dimension of the space 131, 132, 133, such as a known length of the space 131, 132, 133 along the common central axis 150, a location of the source of the leak into the space relative to known dimension of the space 131, 132, 133.

In some examples, the controller 50 utilises a machine-learning model to identify the type and/or location of the leak. The machine-learning model may be stored in a memory of the controller 50, or on a remote server wirelessly accessible by the controller 50. In some examples, the machine-learning model comprises a neural network that is trained to cluster and taxonomise frequencies received by the controller 50 from the tank microphone 240 and the first and second pipe microphones 141, 142. In some examples, the data received by the controller 50 is recorded and used to further train the neural network.

It will be appreciated that, whilst the leaks in the various scenarios described above have been characterised primarily by location of the leak and/or type of fluid that is leaking, in other examples, a leak may be characterised in any other suitable way. Indeed, generally speaking, acoustic signals sensed by the first and/or second microphones may be used to identify and then characterise the type of leak, and then a particular action may be taken depending on the type of leak.

By way of example, whilst each of the second to fourth scenarios described above are associated with a leak in a particular location on the inner pipe (low, mid, high), the actual sequence of events in similar scenarios may also depend on a size of a crack that causes a leak. For instance, when the crack is suitably small, liquid hydrogen in the space may have sufficient time to evaporate before it starts to backflow through the crack, and so the liquid level of hydrogen fuel in the space may be below the location of the crack at the time of such backflow, even when the crack is on a lower side of the inner pipe, as in the second scenario. As such, the open-crack sequence of events, where only gaseous hydrogen fuel passes back through the crack, may be observed for suitably small crack sizes when the leak is in any location on the inner pipe. Conversely, when crack size is comparatively large, a maximum liquid level of hydrogen fuel in the space may exceed a height of the crack on the inner pipe, even when the crack is on an upper side of the inner pipe, as in the fourth scenario. As such, the submerged-crack sequence of events, where liquid hydrogen fuel passes back through the crack, may be observed for suitably large crack sizes when the leak is in any location on the inner pipe. In a similar way, the semi-submerged-crack sequence of events may occur for a particular crack size at any location on the inner pipe, providing the crack is between an upper and lower level of liquid hydrogen fuel in the space.

Moreover, whilst in the fifth scenario it is only determined that the crack is in the outer wall 120, in other examples a specific location of the crack in the outer wall 120 may be determined. As with cracks in the inner wall, the specific location of the crack in the outer wall may provide a certain type of leak, or a particular sequence of events that is observed. For instance, if the crack is on a lower side of the outer pipe, with respect to gravity G, moist air that has entered the space may condense and freeze on the cryo-cooled surfaces, such as the inner pipe. At some point, rather than freeze, some of the moist air may liquefy and drip, which may either block and seal the crack, or drip out of the bottom of the outer pipe as it melts and evaporates as it exits the outer, hotter pipe. The outer pipe may also cool and reach a point where moisture condenses and freezes on the outer pipe, which may also seal the crack.

A crack located between upper and lower sides of the outer pipe may tend to trap any liquified air up to the crack height. A crack on an upper side of the outer pipe may cause the space to fill with moisture that freezes and is trapped in the space along with liquefied air.

Such a crack on an upper surface may have the greatest risk of solidifying air and moisture that is accumulated in the space, and so particular action may be taken to reduce a likelihood of damage to the inner and outer pipework due to such freezing. Moreover, as air is liquefying in the space, assuming that the pressure and temperature in the space is not such that Nitrogen is near its triple point, then Oxygen may liquefy and accumulate first until its relative concentration is low enough to allow the temperature of the air to drop further, and so cause the nitrogen to liquefy. The same may occur when freezing. Subsequently, if the inner pipe is isolated and allowed to heat up again, the Nitrogen may liquefy and evaporate before the Oxygen starts to evaporate, and so during this phase, further liquid Oxygen may condense and accumulate in the space, leading to a larger concentration of liquid Oxygen (which is highly reactive) in the space when the crack is on an upper surface of the outer pipe. In such a case, a form of high-priority action may be taken in the event of such a leak in the outer pipe that traps a significant amount of liquid Oxygen in the space.

It will be appreciated that, in general, any type of leak, or sequence of events, in the vacuum-insulated pipe assembly may be associated with one or more characteristic fingerprints that can be identified, and the exact action that is taken depends on the type of leak that is identified, in some cases regardless as to the specific location of the leak. Moreover, it will be appreciated that the specific action that is taken may be any one of the actions described above, or any other suitable action, as will be evident to the skilled person, and as appropriate to specific implementations of the invention. For instance, in some examples, the action may comprise adjusting a parameter, such as an amplitude window or sampling frequency, of the detection loop employed by the controller 50. This may be to increase a sensitivity of the detection of particular frequencies in the data, which may permit more accurate determination of the leak.

It is to be noted that the term "or" as used herein is to be interpreted to mean "and/or", unless expressly stated otherwise.

## Claims

1. A computer-implemented method comprising:
receiving data from an acoustic sensor, the data indicative of a leak in a vacuum-insulated assembly of a cryogenic fluid system; and
causing an action to be performed based on the data.

2. The computer-implemented method of claim 1, wherein the action comprises any one or more of the following:
issuance of an alert based on the data indicative of the leak;
recording of the data indicative of the leak to memory;
scheduling maintenance of the cryogenic fluid system; and
control of a component of the cryogenic fluid system.

3. The computer-implemented method of claim 1 or claim 2, wherein the data received from the acoustic sensor is indicative of a location of the leak in the vacuum-insulated assembly, and the computer-implemented method comprises causing the action to be performed based on the data.

4. The computer-implemented method of claim 3, comprising determining the location of the leak in the vacuum-insulated assembly based on the data indicative of the location of the leak.

5. The computer-implemented method of claim 4, wherein the vacuum-insulated assembly comprises an outer wall, an inner wall within the outer wall, and a space between the inner wall and the outer wall, wherein the inner wall is configured to carry cryogenic fluid, and the space is evacuated to provide a vacuum; and
wherein the determining the location of the leak comprises at least one of the following:
determining that the leak is a leak in the inner wall;
determining that the leak is a leak in the outer wall;
determining a location of the leak in the inner wall; and
determining a location of the leak in the outer wall.

6. The computer-implemented method of claim 4 or claim 5, comprising causing a first action to be performed based on a determination that the leak is in a first location, and causing a second action to be performed based on a determination that the leak is in a second location, the second action different to the first action, and the second location different to the first location.

7. The computer-implemented method of any one of claims 1 to 6, wherein the data is indicative of a sequence of events associated with the leak, and the computer-implemented method comprises causing the action to be performed based on the sequence of events indicated by the data.

8. The computer-implemented method of claim 7, wherein the vacuum-insulated assembly comprises an outer wall, an inner wall within the outer wall, and a space between the inner wall and the outer wall, wherein the inner wall is configured to carry cryogenic fluid, and the space is evacuated to provide a vacuum; and
wherein the data is indicative of a lower-leak sequence of events, and the computer-implemented method comprises causing the action to be performed based on the submerged-crack sequence of events ,
wherein the lower-leak sequence of events comprises, in order:
a leak event, in which cryogenic fluid flows through the inner wall into the space;
a pressure increase event, in which liquid cryogenic fluid heats up, evaporates, and increases a pressure in the space; and
a liquid backflow event, in which liquid cryogenic fluid flows through the inner wall from the space.

9. The computer-implemented method of claim 8, wherein the submerged-crack sequence of events comprises, after the liquid backflow event, a gaseous backflow event, comprising gaseous cryogenic fluid flowing through the inner wall from the space.

10. The computer-implemented method of any one of claims 7 to 9, wherein the data is indicative of an open-crack sequence of events, and the computer-implemented method comprises causing the action to be performed based on the open-crack sequence of events,
wherein the open-crack sequence of events comprises, in order:
a leak event, in which cryogenic fluid flows through the inner wall into the space;
a pressure increase event, in which liquid cryogenic fluid heats up, evaporates, and increases a pressure in the space; and
a gaseous backflow event, in which gaseous cryogenic fluid flows through the inner wall from the space.

11. The computer-implemented method of any one of claims 1 to 10, wherein the data received from the acoustic sensor is indicative of a type of fluid entering or present in the space, and the method comprises causing the action to be performed based on the type of fluid entering or present in the space.

12. The computer-implemented method of any one of claims 1 to 11, comprising:
receiving, from a first acoustic sensor, first data indicative of a leak in the vacuum-insulated assembly;
receiving, from a second acoustic sensor that is distanced from the first acoustic sensor, second data indicative of the leak in the vacuum-insulated assembly; and
causing the action to be performed based on the first data and the second data.

13. A controller configured to perform the computer-implemented method of any one of claims 1 to 12.

14. A cryogenic fluid system comprising:
a vacuum-insulted assembly comprising an outer wall, an inner wall within the outer wall, and a space between the inner wall and the outer wall, wherein the inner wall is configured to carry cryogenic fluid, and the space is evacuated to provide a vacuum; and
the controller of claim 13.

15. An aircraft hydrogen fuel system comprising the controller of claim 13 or the cryogenic fluid system of claim 14.

16. An aircraft comprising the controller of claim 13, the cryogenic fluid system of claim 14, or the aircraft hydrogen fuel system of claim 15.
